# EUROPEAN PATENT SPECIFICATION

(11) **EP 3 996 337 B1**
(45) Date of publication and mention of the grant of the patent: **14.02.2024**
(21) Application number: 20847977.4
(22) Date of filing: 15.06.2020
(51) Int. Cl.: H04L 47/625, H04L 47/56, H04L 47/6275

(54) **SERVICE DATA TRANSMISSION METHOD AND DEVICE**
VERFAHREN UND VORRICHTUNG ZUR ÜBERTRAGUNG VON DIENSTDATEN
PROCÉDÉ ET DISPOSITIF DE TRANSMISSION DE DONNÉES DE SERVICE

(30) Priority: 26.07.2019 CN 201910684179
(43) Date of publication of application: 11.05.2022
(73) Proprietor: Huawei Technologies Co., Ltd., Shenzhen, Guangdong 518129 (CN)
(72) Inventor: LI, Chao, Shenzhen, Guangdong 518129 (CN); WANG, Xuehuan, Shenzhen, Guangdong 518129 (CN); ZHANG, Xingxin, Shenzhen, Guangdong 518129 (CN)
(74) Representative: Maiwald GmbH
(86) International application number: PCT/CN2020/096137
(87) International publication number: WO 2021/017667

(56) References cited:
- CN-A- 103 929 374
- CN-A- 106 921 586
- CN-A- 108 173 780
- CN-A- 108 282 415
- US-A1- 2019 014 053
- LAN/MAN STANDARDS COMMITTEE OF THE IEEE COMPUTER SOCIETY: "Bridges and Bridged Networks- Amendment: Asynchronous Traffic Shaping", IEEE DRAFT; 802-1QCR-D1-1, IEEE-SA, PISCATAWAY, NJ USA , vol. 802.1cr drafts; 802.1qcr drafts, no. d1 21 June 2019 (2019-06-21), pages 1-159, XP068151933, Retrieved from the Internet: URL:http://grouper.ieee.org/groups/802/1/f iles/private/cr-drafts/d1/802-1Qcr-d1-1.pd f [retrieved on 2019-06-21]
- ANONYMOUS: "IEEE Standard for Local and Metropolitan Area Network--Bridges and Bridged Networks ; IEEE Std 802.1Q-2018 (Revision of IEEE Std 802.1Q-2014)", IEEE STANDARD, IEEE, PISCATAWAY, NJ USA, no. 802.1Q-2018, 4 July 2018 (2018-07-04), pages 1-1993, XP068127700, DOI: 10.1109/IEEESTD.2018.8403927 ISBN: 978-1-5044-4929-8 [retrieved on 2018-07-04]
- DON PANNELL ET AL: "Use Cases - IEEE P802.1DG V0.1", IEEE DRAFT; DG-PANNELL-AUTOMOTIVE-USE-CASES-0519-V02, IEEE-SA, PISCATAWAY, NJ USA , vol. 802.1, no. v02 22 May 2019 (2019-05-22), pages 1-79, XP068150325, Retrieved from the Internet: URL:http://grouper.ieee.org/groups/802/1/f iles/public/docs2019/dg-pannell-automotive -use-cases-0519-v02.pdf [retrieved on 2019-05-22]
- QIAN Peng-fei, QIAO Lu-feng, CHEN Qing-hua: "Design and Implementation of Queue Scheduler for Large-Capacity Switch Fabric That Can Provide QoS", Communications Technology, vol. 51, no. 11, 10 November 2018 (2018-11-10), pages 2655-2661, XP055776315, ISSN: 1002-0802, DOI: 10.3969/j.issn.1002-0802.2018.11.023
- Li Xin; Lu Junhai; Li Wenjing; Yu Huadong; Li Zhenwei; Du Shimo; Liu Zhao; Tang Liangrui: "A Queue Scheduling Approach to QoS Support in Terminal Communication Access Network", 2016 12th International Conference on Natural Computation, Fuzzy Systems and Knowledge Discovery (ICNC-FSKD), 13 August 2016 (2016-08-13), pages 1974-1979, XP032982280, DOI: 10.1109/FSKD.2016.7603483

## Description

This application claims priority to Chinese Patent Application No. 201910684179.X, filed with the China National Intellectual Property Administration on July 26, 2019 and entitled "TRAFFIC TRANSMISSION METHOD AND APPARATUS".

### TECHNICAL FIELD

This application relates to communications technologies, and in particular, to a traffic transmission method and apparatus.

### BACKGROUND

On a vehicle communications network, a switching device aggregates and forwards various traffic (such as audio and video, radar, and CAN/LIN) to a data storage center or a computing center. An advanced driver assistant system and a fully automated driving vehicle are sensitive to a transmission delay and jitter of messages such as a control message and a synchronization message on the network. For example, for a vehicle that travels at a speed of 120 km/h on a highway, if an emergency braking message delay increases by 1s, a braking distance will increase by 33.33 m, which greatly threatens personal security of a driver and a passenger. Therefore, to ensure quality of service (Quality of Service, QoS) of various traffic, the switching device needs to perform traffic shaping on input traffic to obtain a traffic flow, and output the traffic flow through a port to a controller, a data center, or the computing center for further processing.

An asynchronous traffic shaping method of the switching device is a token bucket (Token Bucket)-based traffic shaping method. The switching device configures a token bucket with a specific token capacity for a queue corresponding to each input port. When a quantity of tokens in the bucket does not reach the token capacity, the quantity of the tokens in the token bucket increases at a constant speed. Before traffic scheduling is performed on a queue, whether there are sufficient tokens in a bucket of the queue currently needs to be determined. If there are sufficient tokens, the traffic scheduling is directly performed, and the quantity of the tokens decreases accordingly. Otherwise, the traffic scheduling is performed on the queue only after the quantity of the tokens in the bucket reaches a corresponding value.

The token bucket (Token Bucket)-based traffic shaping method can prevent data output congestion of the switching device. However, in a process of scheduling traffic by using the traffic shaping method, QoS requirements, for example, a forwarding delay and jitter, of some traffic cannot be better met.

LAN/MAN standards committee of the IEEE computer society: "Bridges and Bridged Networks-Amendment: Asynchronous Traffic Shaping", IEEE Draft; 802-1QCR-D1-1, IEEE-SA, Piscataway, NJ USA, vol. 802.1cr drafts; 802.1qcr drafts, no. d1 21 June 2019, pages 1-159 specifies procedures and managed objects for a Bridge to perform asynchronous traffic shaping over full-duplex links with constant bit data rates.

Anonymous: "IEEE Standard for Local and Metropolitan Area Network-Bridges and Bridged Networks", IEEE Std 801.1A-2018 (Revision of IEEE Std 802.1Q-2014), IEEE Standard, IEEE, Piscataway, NJ USA, no. 802.1Q-2018, 4 July 2018, specifies how the Media Access Control (MAC) Service is supported by Bridged Networks, the principles of operation of those networks, and the operation of MAC Bridges and VLAN Bridges, including management, protocols, and algorithms.

### SUMMARY

This application provides a traffic transmission method and apparatus, to optimize a transmission sequence of traffic packets, so as to reduce a transmission waiting delay of the traffic packets and ensure QoS requirements such as a forwarding delay or jitter of traffic. The invention is defined by the appended set of claims. Embodiments and examples not covered by the claims are meant to illustrate, and facilitate the understanding of, the claimed invention.

According to a first aspect, an embodiment of this application provides a traffic transmission method. The method may include: determining scheduling times of head traffic packets of at least two of N transmission queues, where N is a positive integer greater than or equal to 2; obtaining priorities of the at least two transmission queues and data packet sizes of the head traffic packets of the at least two transmission queues; determining a first traffic packet based on the scheduling times, the priorities, and the data packet sizes, where the first traffic packet is a head traffic packet of one of the at least two transmission queues; and transmitting the first traffic packet.

In this implementation, aggregation and forwarding of traffic packets may be implemented. Because traffic packets to be transmitted are determined from a plurality of transmission queues in processes of aggregation and forwarding with reference to the scheduling times, the priorities, and the data packet sizes, a transmission sequence of the traffic packets may be optimized, to reduce a transmission waiting delay of the traffic packets, and ensure QoS requirements such as a forwarding delay and jitter of traffic.

In a possible design, the determining a first traffic packet based on the scheduling times, the priorities, and the data packet sizes may include: determining a first type of traffic packets from the head traffic packets of the at least two transmission queues based on at least two of the scheduling times, the priorities, or the data packet sizes; and using a traffic packet with a smallest data packet size in the first type of traffic packets as the first traffic packet.

In a possible design, the head traffic packets of the at least two transmission queues include the first type of traffic packets and a second type of traffic packets, a scheduling time of any traffic packet in the first type of traffic packets is equal, a priority of any traffic packet in the first type of traffic packets is equal, and the scheduling time of any traffic packet in the first type of traffic packets is earlier than a scheduling time of the second type of traffic packets; or the head traffic packets of the at least two transmission queues include the first type of traffic packets, a scheduling time of any traffic packet in the first type of traffic packets is equal, and a priority of any traffic packet in the first type of traffic packets is equal.

In a possible design, the head traffic packets of the at least two transmission queues include the first type of traffic packets and the second type of traffic packets, a scheduling time of any traffic packet in the first type of traffic packets is equal, and a difference between a priority of any traffic packet in the first type of traffic packets and a highest priority is greater than 0 and less than or equal to a second threshold. The scheduling time of any traffic packet in the first type of traffic packets is earlier than or equal to a scheduling time of the second type of traffic packets, the highest priority is a maximum value of priorities of transmission queues corresponding to a third type of traffic packets, and the third type of traffic packets include a traffic packet that is in the second type of traffic packets and whose scheduling time is equal to scheduling times of the first type of traffic packets.

In a possible design, a size of any traffic packet in the first type of traffic packets meets at least one of the following: The size is less than or equal to a third threshold; or a difference between the size and a size of a traffic packet corresponding to the highest priority is greater than or equal to a fourth threshold.

In a possible design, a difference between priorities of any two traffic packets in the first type of traffic packets is less than or equal to a second threshold. Scheduling times of the first type of traffic packets are a minimum scheduling time, the first type of traffic packets include a traffic packet with a highest priority, the minimum scheduling time is a minimum value of the scheduling times of the head traffic packets of the at least two transmission queues, and the highest priority is a maximum value of priorities of transmission queues corresponding to the traffic packets with the minimum scheduling time.

In a possible design, the head traffic packets of the at least two transmission queues include the first type of traffic packets and a second type of traffic packets, a difference between a scheduling time of any traffic packet in the first type of traffic packets and a minimum scheduling time of the second type of traffic packets is greater than 0 and less than or equal to a first threshold, and a difference between a priority of any traffic packet in the first type of traffic packets and a priority of a traffic packet corresponding to the minimum scheduling time is less than or equal to a second threshold.

In a possible design, a size of any traffic packet in the first type of traffic packets meets at least one of the following: The size is less than or equal to a third threshold; or a difference between the size and a size of the traffic packet corresponding to the minimum scheduling time is greater than or equal to a fourth threshold.

In a possible design, a difference between scheduling times of any two traffic packets in the first type of traffic packets is less than or equal to a first threshold, and a difference between priorities of any two traffic packets in the first type of traffic packets is less than or equal to a second threshold, where a minimum value of scheduling times of the first type of traffic packets is a minimum value of the scheduling times of the head traffic packets of the at least two transmission queues, the first type of traffic packets include a traffic packet with a highest priority, and the highest priority is a maximum value of a priority corresponding to a traffic packet whose scheduling time has a difference less than or equal to the first threshold from the minimum value.

In a possible design, if there are a plurality of traffic packets with the smallest data packet size in the first type of traffic packets, the method may further include: determining the first traffic packet based on at least one of a size of buffer space of transmission queues corresponding to the plurality of traffic packets with the smallest data packet size, a size of remaining buffer space, or waiting times of the head traffic packets in a buffer.

In a possible design, the determining the first traffic packet based on at least one of a size of buffer space of transmission queues corresponding to the plurality of traffic packets with the smallest data packet size, a size of remaining buffer space, or waiting times of the head traffic packets in a buffer may include: selecting, from the plurality of traffic packets with the smallest data packet size, a traffic packet that meets at least one of the following as the first traffic packet: A transmission queue corresponding to the traffic packet has smallest buffer space; a transmission queue corresponding to the traffic packet has smallest remaining buffer space; or a head traffic packet of a transmission queue corresponding to the traffic packet has a longest waiting time in the buffer.

According to a second aspect, an embodiment of this application provides a traffic transmission apparatus. The apparatus may include: a processing module, configured to determine scheduling times of head traffic packets of at least two of N transmission queues, where N is a positive integer greater than or equal to 2. The processing module is further configured to obtain priorities of the at least two transmission queues and data packet sizes of the head traffic packets of the at least two transmission queues. The processing module is further configured to determine a first traffic packet based on the scheduling times, the priorities, and the data packet sizes, where the first traffic packet is a head traffic packet of one of the at least two transmission queues. The processing module is further configured to transmit the first traffic packet through a transceiver module.

In a possible design, the processing module is configured to: determine a first type of traffic packets from the head traffic packets of the at least two transmission queues based on at least two of the scheduling times, the priorities, or the data packet sizes; and use a traffic packet with a smallest data packet size in the first type of traffic packets as the first traffic packet.

In a possible design, the head traffic packets of the at least two transmission queues include the first type of traffic packets and a second type of traffic packets, a scheduling time of any traffic packet in the first type of traffic packets is equal, a priority of any traffic packet in the first type of traffic packets is equal, and the scheduling time of any traffic packet in the first type of traffic packets is earlier than a scheduling time of the second type of traffic packets; or the head traffic packets of the at least two transmission queues include the first type of traffic packets, a scheduling time of any traffic packet in the first type of traffic packets is equal, and a priority of any traffic packet in the first type of traffic packets is equal.

In a possible design, the head traffic packets of the at least two transmission queues include the first type of traffic packets and the second type of traffic packets, a scheduling time of any traffic packet in the first type of traffic packets is equal, and a difference between a priority of any traffic packet in the first type of traffic packets and a highest priority is greater than 0 and less than or equal to a second threshold. The scheduling time of any traffic packet in the first type of traffic packets is earlier than or equal to a scheduling time of the second type of traffic packets, the highest priority is a maximum value of priorities of transmission queues corresponding to a third type of traffic packets, and the third type of traffic packets include a traffic packet that is in the second type of traffic packets and whose scheduling time is equal to scheduling times of the first type of traffic packets.

In a possible design, a size of any traffic packet in the first type of traffic packets meets at least one of the following: The size is less than or equal to a third threshold; or a difference between the size and a size of a traffic packet corresponding to the highest priority is greater than or equal to a fourth threshold.

In a possible design, a difference between priorities of any two traffic packets in the first type of traffic packets is less than or equal to a second threshold. Scheduling times of the first type of traffic packets are a minimum scheduling time, the first type of traffic packets include a traffic packet with a highest priority, the minimum scheduling time is a minimum value of the scheduling times of the head traffic packets of the at least two transmission queues, and the highest priority is a maximum value of priorities of transmission queues corresponding to the traffic packets with the minimum scheduling time.

In a possible design, the head traffic packets of the at least two transmission queues include the first type of traffic packets and a second type of traffic packets, a difference between a scheduling time of any traffic packet in the first type of traffic packets and a minimum scheduling time of the second type of traffic packets is greater than 0 and less than or equal to a first threshold, and a difference between a priority of any traffic packet in the first type of traffic packets and a priority of a traffic packet corresponding to the minimum scheduling time is less than or equal to a second threshold.

In a possible design, a size of any traffic packet in the first type of traffic packets meets at least one of the following: The size is less than or equal to a third threshold; or a difference between the size and a size of the traffic packet corresponding to the minimum scheduling time is greater than or equal to a fourth threshold.

In a possible design, a difference between scheduling times of any two traffic packets in the first type of traffic packets is less than or equal to a first threshold, and a difference between priorities of any two traffic packets in the first type of traffic packets is less than or equal to a second threshold, where a minimum value of scheduling times of the first type of traffic packets is a minimum value of the scheduling times of the head traffic packets of the at least two transmission queues, the first type of traffic packets include a traffic packet with a highest priority, and the highest priority is a maximum value of a priority corresponding to a traffic packet whose scheduling time has a difference less than or equal to the first threshold from the minimum scheduling time.

In a possible design, if there are a plurality of traffic packets with the smallest data packet size in the first type of traffic packets, the processing module is further configured to determine the first traffic packet based on at least one of a size of buffer space of transmission queues corresponding to the plurality of traffic packets with the smallest data packet size, a size of remaining buffer space, or waiting times of the head traffic packets in a buffer.

In a possible design, the processing module is configured to select, from the plurality of traffic packets with the smallest data packet size, a traffic packet that meets at least one of the following as the first traffic packet: A transmission queue corresponding to the traffic packet has smallest buffer space; a transmission queue corresponding to the traffic packet has smallest remaining buffer space; or a head traffic packet of a transmission queue corresponding to the traffic packet has a longest waiting time in the buffer.

According to a third aspect, this application provides a traffic transmission apparatus, including: one or more processors; and a memory, configured to store one or more programs. When the one or more programs are executed by the one or more processors, the one or more processors are enabled to implement the method according to any one of the possible designs of the first aspect.

In a possible design, the traffic transmission apparatus is a terminal device.

According to a fourth aspect, this application provides a computer-readable storage medium, including a computer program. When the computer program is executed on a computer, the computer is enabled to perform the method according to any one of the possible designs of the first aspect.

According to a fifth aspect, this application provides a computer program. When the computer program is executed by a computer, the computer program is used to perform the method according to any one of the possible designs of the first aspect.

According to a sixth aspect, this application provides a chip, including a processor and a memory. The memory is configured to store a computer program, and the processor is configured to invoke and run the computer program stored in the memory, to implement the method according to any one of the possible designs of the first aspect.

According to a seventh aspect, this application provides a vehicle, including at least one sensor, the traffic transmission apparatus according to any one of the possible designs of the second aspect, and a receiving apparatus. The at least one sensor is connected to the traffic transmission apparatus, and the traffic transmission apparatus is connected to the receiving apparatus.

According to the traffic transmission method and apparatus in this application, aggregation and forwarding of traffic packets are implemented by determining scheduling times of head traffic packets of at least two of N transmission queues, obtaining priorities of the at least two transmission queues and data packet sizes of the head traffic packets of the at least two transmission queues, determining a head traffic packet of one of the at least two transmission queues as a first traffic packet based on the scheduling times, the priorities, and the data packet sizes, and transmitting the first traffic packet. Because traffic packets to be transmitted are determined from a plurality of transmission queues in processes of aggregation and forwarding with reference to the scheduling times, the priorities, and the data packet sizes, a transmission sequence of the traffic packets may be optimized, to reduce a transmission waiting delay of the traffic packets, and ensure QoS requirements such as a forwarding delay and jitter of traffic.

### BRIEF DESCRIPTION OF DRAWINGS

FIG. 1 is a schematic diagram of an application scenario according to an embodiment of this application;
FIG. 2 is a schematic diagram of another application scenario according to an embodiment of this application;
FIG. 3 is a schematic diagram of determining a scheduling time by using an ATS algorithm according to an embodiment of this application;
FIG. 4 is a flowchart of a traffic transmission method according to an embodiment of this application;
FIG. 5 is a schematic diagram of scheduling of a traffic transmission method according to an embodiment of this application;
FIG. 6 is a schematic diagram of scheduling of a traffic transmission method according to an embodiment of this application;
FIG. 7 is a schematic diagram of scheduling of a traffic transmission method according to an embodiment of this application;
FIG. 8 is a schematic diagram of scheduling of a traffic transmission method according to an embodiment of this application;
FIG. 9 is a flowchart of another traffic transmission method according to an embodiment of this application;
FIG. 10A, FIG. 10B, FIG. 10C and FIG. 10D are a flowchart of another traffic transmission method according to an embodiment of this application;
FIG. 11 is a schematic block diagram of a traffic transmission apparatus 1000 according to an embodiment of this application; and
FIG. 12 is a schematic block diagram of a traffic transmission apparatus 1100 according to an embodiment of this application.

### DESCRIPTION OF EMBODIMENTS

In this application, terms such as "first" and "second" are merely used for distinction and description and shall not be understood as an indication or implication of relative importance or an indication or implication of an order. In addition, the terms "include", "have", and any variant thereof are intended to cover a non-exclusive inclusion, for example, include a series of steps or units. Methods, systems, products, or devices are not necessarily limited to those steps or units that are clearly listed, but may include other steps or units that are not clearly listed or inherent to such processes, methods, products, or devices.

It should be understood that, in this application, "at least one" means one or more, and "a plurality of" means two or more. The term "and/or" is used to describe an association relationship between associated objects, and indicates that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may indicate that a, b, c, "a and b", "a and c", "b and c", or "a, b, and c", where a, b, and c may be singular or plural.

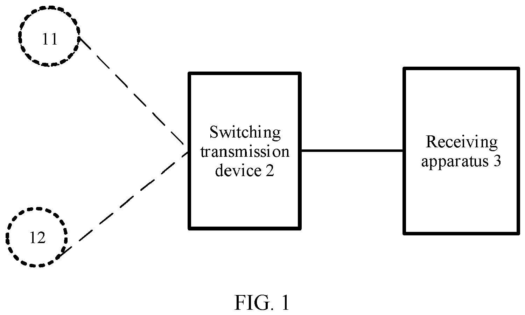

FIG. 1 is a schematic diagram of an application scenario according to an embodiment of this application. As shown in FIG. 1, the application scenario may include a switching transmission device 2 and a receiving apparatus 3. The switching transmission device 2 is connected to the receiving apparatus 3.

The switching transmission device 2 is configured to perform a traffic transmission method in this embodiment of this application, to aggregate and forward traffic to the receiving apparatus 3. The traffic may be traffic generated by the switching transmission device, or may be traffic received from other apparatuses. The other apparatuses may be, for example, sensors, controllers, or other traffic switching transmission devices.

In some examples, the other apparatuses are sensors (11 and 12) shown by dashed lines in FIG. 1. The sensors (11 and 12) are separately connected to the switching transmission device 2. The sensors (11 and 12) are configured to collect data, and transmit the data to the switching transmission device 2. The switching transmission device 2 is configured to perform the traffic transmission method in this embodiment of this application, and aggregate and forward received traffic of the sensors (11 and 12) to the receiving apparatus 3. The switching transmission device 2 may include a plurality of input ports and one output port. One input port is connected to one or more sensors. The switching transmission device 2 allocates data received through one or more input ports into corresponding transmission queues, shapes traffic flows of a plurality of transmission queues into one traffic flow, and transmits the traffic flow to the receiving apparatus 3 through the output port. The traffic flow may include one or more traffic packets. A traffic packet arriving at the output port can be transmitted only when a link is idle after transmission of a previous traffic packet is completed. According to the traffic transmission method in this application, a scheduling waiting delay caused by outputting traffic packets in sequence can be reduced.

It should be noted that the sensors (11 and 12) shown in FIG. 1 are a schematic description, and a quantity of the sensors may alternatively be three, four, or the like. The quantity shown in the figure is not limited in this embodiment of this application.

A traffic packet (Traffic packet) in this application may also be referred to as a frame (frame), a packet (packet), data (data), a data packet (data packet), a segment (segment), or the like. This is not limited in this application. A traffic packet (Traffic packet) is used as an example for description in this application.

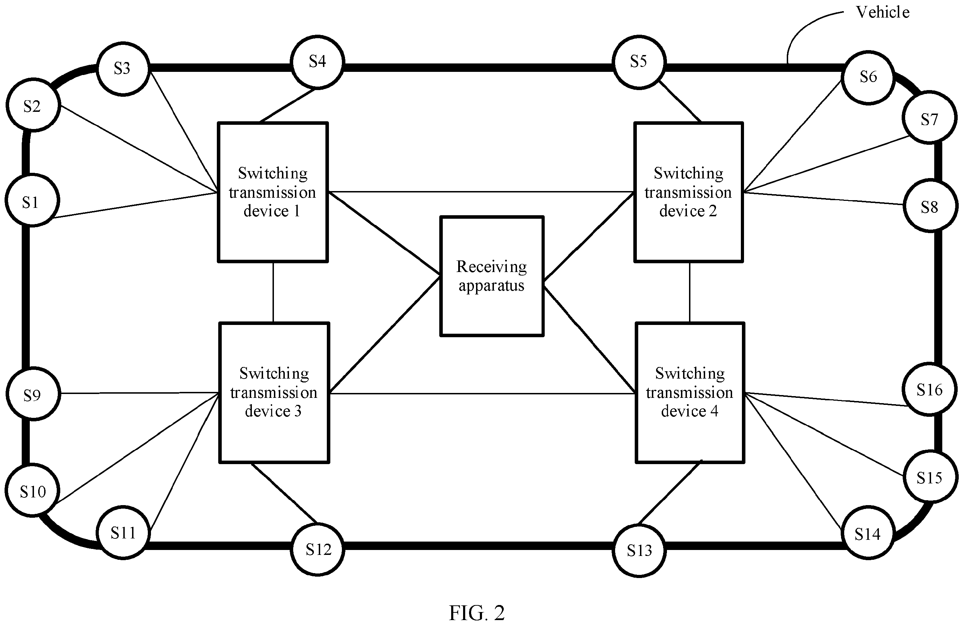

The traffic transmission method in this application may be applied to traffic scheduling for intra-vehicle network communication, or traffic scheduling for inter-vehicle network communication, or may be applied to another communications system. For example, the traffic transmission method may be applied to vehicle-to-vehicle (Vehicle to Vehicle, V2V) communication, vehicle-to-pedestrian (Vehicle to Pedestrian, V2P) communication, or vehicle-to-infrastructure/network (Vehicle to Infrastructure/Network, V2I/N) communication. The intra-vehicle network communication is used as an example. FIG. 2 is a schematic diagram of another application scenario according to an embodiment of this application. As shown in FIG. 2, a plurality of sensors (S1, S2, S3, ..., and S16) are separately disposed on a vehicle, and the plurality of sensors (S1, S2, S3, ..., and S16) are configured to collect traffic such as driving data of the vehicle and surrounding environment data. The sensors (S1, S2, S3, and S4) are connected to a switching transmission device 1, the sensors (S5, S6, S7, and S8) are connected to a switching transmission device 2, the sensors (S9, S10, S11, and S12) are connected to a switching transmission device 3, and the sensors (S13, S14, S15, and S16) are connected to a switching transmission device 4. The switching transmission device 1, the switching transmission device 2, the switching transmission device 3, and the switching transmission device 4 are separately connected to a receiving apparatus. The switching transmission device 1, the switching transmission device 2, the switching transmission device 3, and the switching transmission device 4 may also be connected. The sensors (S1, S2, S3, and S4) transmit collected traffic to the switching transmission device connected to the sensors (S1, S2, S3, and S4). Any one of the switching transmission device 1, the switching transmission device 2, the switching transmission device 3, and the switching transmission device 4 may perform the traffic transmission method in this application, and process received traffic, to reduce a scheduling waiting delay caused by outputting traffic packets in sequence, and ensure QoS requirements such as a forwarding delay and jitter of traffic.

The sensor in this application is configured to obtain measured information, and convert the measured information into an electrical signal or information in another required form according to a specific rule for outputting, to meet requirements for information transmission, processing, storage, displaying, recording, control, and the like. The sensor may be any one of the following specific forms: a millimeter-wave radar, a laser radar, an ultrasonic radar, a camera, a positioning system (for example, a global positioning system (Global Positioning System, GPS)), an inertial measurement unit (Inertial Measurement Unit, IMU), a speed sensor, an acceleration sensor, a humidity sensor, a light intensity sensor, a telematics BOX (Telematics BOX, T-Box), or the like.

The switching transmission device in this application may also be referred to as a traffic transmission apparatus, and is configured to perform routing and switching functions, and aggregate and transfer various traffic. The traffic may be audio and video data, a synchronization message, a control message, or the like. The traffic transmission apparatus may be a router, a switch, or the like.

The receiving apparatus in this application may be a controller, or may be a computing center or a storage center, and is configured to perform calculation and control of one or more functions. The receiving apparatus may be independent, or may be integrated with the switching transmission device, for example, may be an in-vehicle computing platform, a vehicle-mounted computer, a domain controller, or a multi-domain controller (for example, an automated driving controller, an infotainment controller). Alternatively, the receiving apparatus may be a data center, configured to store important data. For example, the data center may be a black box, a dashcam, or the like in the vehicle.

It should be noted that the foregoing network elements (such as the sensor, the switching transmission device, and the receiving apparatus) are logical concepts. In practice, a form of a network element may be a physical device, for example, a box, or may be a board, or a chip or an area on a board. In practice, a plurality of network elements may further be combined into one device. For example, the switching transmission device and the receiving apparatus may be on one circuit board.

The receiving apparatus may be located inside the vehicle, or may be located on another network element outside the vehicle, for example, a base station or a roadside station. The receiving apparatus and a switching transmission unit may be located in a same vehicle, or may be located in different vehicles.

The scheduling time (assigned eligibility time) in this application is used to indicate a moment, and the traffic transmission apparatus transmits a traffic packet based on the moment, for example, determines, based on scheduling times of a plurality of traffic packets, a sequence in which the plurality of traffic packets are output from a port of the traffic transmission apparatus. The scheduling time may be determined by using an asynchronous traffic shaper (Asynchronous Traffic Shaper, ATS) algorithm. Certainly, the scheduling time may also be determined by using another algorithm. The ATS algorithm is not used as a limitation in this embodiment of this application.

For example, the traffic transmission apparatus shown in FIG. 1 or FIG. 2 may have a plurality of input ports, and the input ports may be connected to the sensors, or connected to another traffic transmission apparatus. The traffic transmission apparatus receives traffic packets from one or more input ports, and allocates the traffic packets into corresponding transmission queues based on traffic types of the traffic packets. The traffic transmission apparatus configures specific buffer space for each transmission queue. Traffic packets in each transmission queue are arranged in sequence based on time points at which the traffic packets arrive at the traffic transmission apparatus, and are stored in corresponding buffer space. The traffic transmission apparatus further configures a token bucket with a specific token capacity for each transmission queue. The traffic transmission apparatus determines a scheduling time of a head traffic packet of each transmission queue based on parameters such as a token growth rate and a current token quantity of each transmission queue and a current system time, then determines, based on the scheduling time of the head traffic packet of each transmission queue, a traffic packet to be preferentially transmitted, and transmits the traffic packet. The foregoing process of determining, based on the scheduling time of the head traffic packet of each transmission queue, the traffic packet to be preferentially transmitted is repeated until transmission of all traffic packets is completed. In some examples, before the process of determining, based on the scheduling time of the head traffic packet of each transmission queue, the traffic packet to be preferentially scheduled and transmitted is performed for an i^{th} (i>1) time, only a scheduling time of a head traffic packet of a transmission queue in which a traffic packet to be preferentially scheduled and transmitted is located and that is determined when the process is performed for an (i-1)^{th} time may be calculated and updated, and a scheduling time of a head traffic packet of another transmission queue remains unchanged. For example, before the method in this embodiment of this application is performed for the first time, in three transmission queues (Q₁, Q₂, and Q₃), traffic packets in the transmission queue Q₁ from the head to the tail of the queue are a traffic packet 11 (traffic packet 11) and a traffic packet 12 (traffic packet 12), traffic packets in the transmission queue Q₂ from the head to the tail of the queue are a traffic packet 21 (traffic packet 21) and a traffic packet 22 (traffic packet 22), and traffic packets in the queue Q₃ from the head to the tail of the queue are a traffic packet 31 (traffic packet 31) and a traffic packet 32 (traffic packet 32). The traffic transmission apparatus may determine scheduling times of head traffic packets of Q₁, Q₂, and Q₃ based on parameters such as a token growth rate and a current token quantity of each transmission queue and a current system time, for example, T₁, T₂, and T₃ respectively. After a traffic packet to be preferentially scheduled and transmitted is determined based on the scheduling times (T₁, T₂, and T₃) of the head traffic packets of the transmission queues at a time, the traffic packet 11 (traffic packet 11) is determined and transmitted. Before the method in this embodiment of this application is performed for the second time, because the head traffic packet of Q₁ changes to the traffic packet 12 (traffic packet 12), the scheduling time of the head traffic packet of Q₁ is recalculated, for example, the scheduling time is T₁'. The traffic packet to be preferentially scheduled and transmitted is determined again based on the scheduling times (T₁', T₂, and T₃) of the head traffic packets of the transmission queues, the traffic packet is transmitted, and so on, until the transmission of all the traffic packets is completed.

The priority (priority) in this application is used to indicate a priority level of scheduling and transmission of a transmission queue. It should be noted that a priority of a traffic packet described in this embodiment of this application refers to a priority of a transmission queue in which the traffic packet is located. The priority may be represented by a numeric value. A larger value indicates a higher priority, or a smaller value indicates a higher priority. The priority may be flexibly set according to a requirement. In this application, that a larger value indicates a higher priority is used as an example for description.

A difference between A and B in this application may be understood as a smaller one of A and B is subtracted from a larger one, that is, B is subtracted from A, or A is subtracted from B. The difference may also be understood as an absolute value of A minus B.

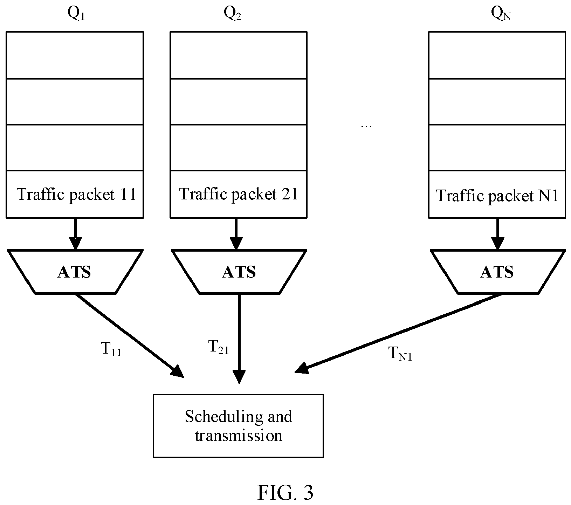

For example, FIG. 3 is a schematic diagram of determining a scheduling time by using an ATS algorithm according to an embodiment of this application. As shown in FIG. 3, there are N transmission queues, and the N transmission queues may be N transmission queues of the foregoing switching transmission device 2. There is a traffic packet 11 (traffic packet 11) in a transmission queue Q₁, a traffic packet 21 (traffic packet 21) in a transmission queue Q₂, ..., and a traffic packet N1 (traffic packet N1) in a transmission queue Q_{N}. The traffic packet 11 (traffic packet 11) is a head traffic packet of the transmission queue Q₁, the traffic packet 21 (traffic packet 21) is a head traffic packet of the transmission queue Q₂, and the traffic packet N1 (traffic packet N1) is a head traffic packet of the transmission queue Q_{N}. Data packet sizes of the traffic packet 11 (traffic packet 11), the traffic packet 21 (traffic packet 21), and the traffic packet N1 (traffic packet N1) may be the same or different. A unit of the data packet sizes may be a bit (bit), a byte (B), a kilobyte (KB), or the like. The switching transmission device 2 may determine a scheduling time of the head traffic packet of each transmission queue by using the ATS algorithm, for example, determine that the scheduling time of the head traffic packet of the transmission queue Q₁ is Tn, the scheduling time of the head traffic packet of the transmission queue Q₂ is T₂₁, ..., and the scheduling time of the head traffic packet of the transmission queue Q_{N} is T_{N1}.

In the traffic transmission method in this application, a traffic packet to be preferentially scheduled and transmitted may be determined with reference to scheduling times, priorities, and data packet sizes. For a specific implementation, refer to descriptions in the following embodiments.

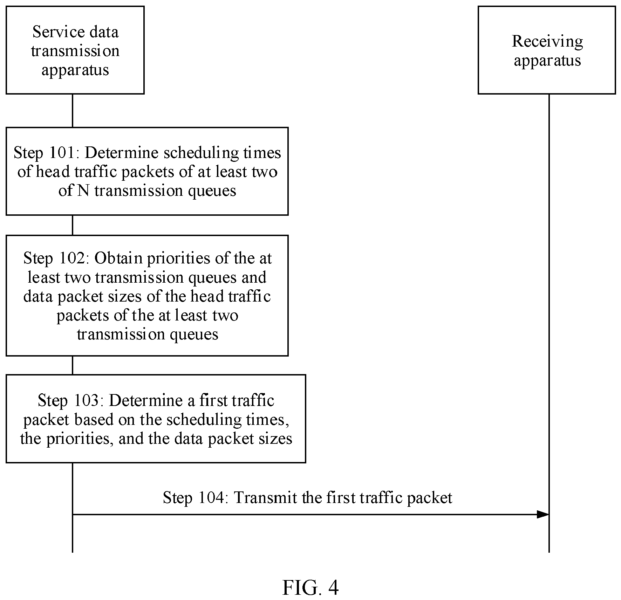

FIG. 4 is a flowchart of a traffic transmission method according to an embodiment of this application. As shown in FIG. 4, the method in this embodiment may include the following steps.

Step 101: A traffic transmission apparatus determines scheduling times of head traffic packets of at least two transmission queues, where N is a positive integer greater than or equal to 2.

Specifically, the at least two transmission queues are transmission queues in N transmission queues and have traffic packets to be transmitted.

The traffic transmission apparatus may determine the scheduling times of the head traffic packets of the at least two of the N transmission queues by using the foregoing ATS algorithm. For example, N=4 means that the traffic transmission apparatus has four transmission queues (a transmission queue Q₁, a transmission queue Q₂, a transmission queue Q₃, and a transmission queue Q₄). Two of the transmission queues (the transmission queue Q₁ and the transmission queue Q₂) have traffic packets, and the other two transmission queues (the transmission queue Q₃ and the transmission queue Q₄) are empty. In this case, the traffic transmission apparatus may determine scheduling times of head traffic packets of the transmission queue Q₁ and the transmission queue Q₂ by using the foregoing ATS algorithm.

For example, the traffic packet may come from a sensor, and the traffic transmission apparatus receives a traffic packet sent by the sensor. The traffic packet may be audio and video data, radar data, controller area network (Controller Area Network, CAN) data, local interconnect network (Local Interconnect Network, LIN) data, or the like.

The traffic transmission apparatus may allocate a received traffic packet to a corresponding transmission queue, for example, to the transmission queue Q₁ shown in FIG. 3.

It may be understood that, in the embodiments of this application, the head traffic packets of the at least two transmission queues each may specifically be a head traffic packet of each of the at least two transmission queues. Correspondingly, the scheduling times of the head traffic packets of the at least two transmission queues each may specifically be a scheduling time of a head traffic packet of each of the at least two transmission queues.

Step 102: The traffic transmission apparatus obtains priorities of the at least two transmission queues and data packet sizes of the head traffic packets of the at least two transmission queues.

It may be understood that, in the embodiments of this application, the priorities of the at least two transmission queues each may specifically be a priority of each of the at least two transmission queues; and the data packet sizes of the head traffic packets of the at least two transmission queues each may specifically be a data packet size of the head traffic packet of each of the at least two transmission queues.

The example in step 101 is used for further description. The traffic transmission apparatus may obtain a priority of the transmission queue Q₁ and a priority of the transmission queue Q₂, and obtain a data packet size of the head traffic packet 11 (traffic packet 11) of the transmission queue Q₁ and a data packet size of the head traffic packet 21 (traffic packet 21) of the transmission queue Q₂.

Step 103: The traffic transmission apparatus determines a first traffic packet based on the scheduling times, the priorities, and the data packet sizes, where the first traffic packet is a head traffic packet of one of the at least two transmission queues.

The traffic transmission apparatus may determine a head traffic packet of one of the at least two transmission queues as the first traffic packet based on the scheduling times, determined in step 101, of the at least two transmission queues and the priorities and the data packet sizes, obtained in step 102, of the at least two transmission queues. The examples of step 101 and step 102 are used for further description. The traffic transmission apparatus may determine a head traffic packet of one transmission queue as the first traffic packet based on the scheduling times, priorities, and data packet sizes of the transmission queue Q₁ and the transmission queue Q₂.

Step 104: The traffic transmission apparatus transmits the first traffic packet to a receiving apparatus.

For example, if it is determined in step 103 that the head traffic packet of the transmission queue Q₂ is the first traffic packet, the head traffic packet of the transmission queue Q₂ may be sent to the receiving apparatus in step 104.

After transmitting the first traffic packet, the traffic transmission apparatus in this embodiment of this application may recalculate a scheduling time of a transmission queue of which the head traffic packet changes, and obtain a data packet size of the head traffic packet. Step 103 is repeatedly performed to determine and transmit a new first traffic packet until transmission of the traffic packets of the N transmission queues is completed. For example, if Q₂ still includes a traffic packet to be transmitted, the scheduling time of the head traffic packet of Q₂ is recalculated. If Q₃ includes a traffic packet to be transmitted, the scheduling time of the head traffic packet of Q₃ is calculated.

In this embodiment, the traffic transmission apparatus implements aggregation and forwarding of traffic packets by determining scheduling times of head traffic packets of at least two of N transmission queues, obtaining priorities of the at least two transmission queues and data packet sizes of the head traffic packets of the at least two transmission queues, determining a head traffic packet of one of the at least two transmission queues as a first traffic packet based on the scheduling times, the priorities, and the data packet sizes, and transmitting the first traffic packet. Because traffic packets to be transmitted are determined from a plurality of transmission queues in processes of aggregation and forwarding with reference to the scheduling times, the priorities, and the data packet sizes, a transmission sequence of the traffic packets may be optimized, to reduce a transmission waiting delay of the traffic packets, and ensure QoS requirements such as a forwarding delay and jitter of traffic.

For example, the scheduling times of the transmission queue Q₁ and the transmission queue Q₂ are equal and the priorities of the transmission queue Q₁ and the transmission queue Q₂ are equal. In the method of this embodiment, it may be determined that a traffic packet with a relatively small data packet size is transmitted first, to reduce a forwarding delay, jitter, and the like.

The scheduling times determined by using the ATS algorithm may further enable the traffic transmission method in this embodiment of this application to implement traffic shaping of a traffic burst of a communications network.

There may be a plurality of specific implementations of step 103 in this embodiment of this application. The following separately describes three implementations by example.

### Implementation 1

For example, in one implementation, namely, the implementation 1, the traffic transmission apparatus determines a first type of traffic packets from the head traffic packets of the at least two transmission queues based on the scheduling times and the priorities of the at least two transmission queues, and a traffic packet whose data packet size meets a preset size condition in the first type of traffic packets is used as the first traffic packet.

In an example, the first type of traffic packets in the implementation 1 may have the following properties: A scheduling time of any traffic packet in the first type of traffic packets is equal, a priority of any traffic packet in the first type of traffic packets is equal, and the scheduling time of any traffic packet in the first type of traffic packets is earlier than a scheduling time of a second type of traffic packets, where the second type of traffic packets include a head traffic packet of one or more of the at least two transmission queues.

For example, the head traffic packets of the at least two transmission queues may be classified into two types of traffic packets: the first type of traffic packets and the second type of traffic packets. The scheduling time of any traffic packet in the first type of traffic packets is equal, the priority of any traffic packet in the first type of traffic packets is equal, and the scheduling time of any traffic packet in the first type of traffic packets is earlier than the scheduling time of the second type of traffic packets.

Alternatively, the first type of traffic packets in the implementation 1 may have the following properties: The head traffic packets of the at least two transmission queues include only the first type of traffic packets, the scheduling time of any traffic packet in the first type of traffic packets is equal, and the priority of any traffic packet in the first type of traffic packets is equal.

For example, the scheduling times of the head traffic packets of the at least two transmission queues are equal and the priorities of the head traffic packets of the at least two transmission queues are equal. In this case, the head traffic packets of the at least two transmission queues belong to the first type of traffic packets.

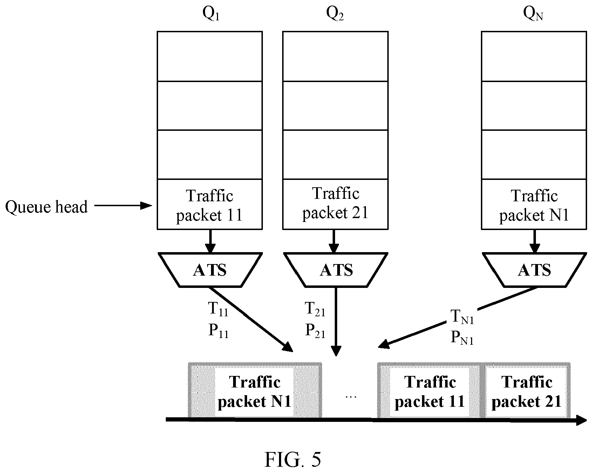

A scenario shown in FIG. 5 is used as an example for description. FIG. 5 is a schematic diagram of scheduling of the traffic transmission method according to this embodiment of this application. As shown in FIG. 5, it is assumed that the N transmission queues each have traffic to be transmitted, that is, the at least two transmission queues are N transmission queues. The traffic transmission apparatus performs the foregoing step 101 to determine the scheduling times (T₁₁, T₂₁, ..., and T_{N1}) of the head traffic packets (traffic packet 11, traffic packet 21, ..., and traffic packet N1) of the N transmission queues. The scheduling times (T₁₁, T₂₁, ..., and T_{N1}) of the head traffic packets (traffic packet 11, traffic packet 21, ..., and traffic packet N1) of the N transmission queues are equal, that is T₁₁=T₂₁=...=T_{N1}. The traffic transmission apparatus performs the foregoing step 102 to obtain the priorities (P₁₁, P₂₁, ..., and P_{N1}) of the N transmission queues (Q₁, Q₂, ..., and Q_{N}) and the data packet sizes (S₂₁, S₁₁, ..., and S_{N1}) of the head traffic packets. The priorities (P₁₁, P₂₁, ..., and P_{N1}) of the N transmission queues (Q₁, Q₂, ..., and Q_{N}) are equal, that is, P₁₁=P₂₁=...=P_{N1}. Based on the implementation 1 of step 103 and the properties of the first type of traffic packets, it can be determined that the first type of traffic packets in this embodiment include the traffic packet 11, the traffic packet 21, ..., and the traffic packet N1. A traffic packet whose data packet size meets a preset size condition in the first type of traffic packets is used as the first traffic packet. For example, a data packet that has a smallest data packet size in the first type of traffic packets is used as the first traffic packet. Assuming that the data packet size (S₂₁) of the traffic packet 21 < the data packet size (S₁₁) of the traffic packet 11 < ... < the data packet size (S_{N1}) of the traffic packet N1, that is, the data packet size (S₂₁) of the traffic packet 21 is the smallest, the traffic packet 21 is used as the first traffic packet, and the first traffic packet is transmitted. The traffic packet transmission method in this application is repeatedly performed to determine a next traffic packet to be transmitted. For example, when the traffic packet transmission method in this application is performed again, scheduling times of other traffic packets except a traffic packet 22 are the same. The at least two transmission queues are other transmission queues except Q₂. Assuming that the data packet size (Sn) of the traffic packet 11 is the smallest, the next traffic packet to be transmitted is the traffic packet 11. As shown in FIG. 5, the traffic packet 11 is transmitted after the traffic packet 21.

For example, for the foregoing scenario, in this embodiment of this application, the first traffic packet may be determined through the following steps: First, a set D1={traffic packet 11, traffic packet 21, ..., traffic packet N1} of traffic packets that have minimum and equal scheduling times is obtained through filtering; then, traffic packets that have highest and equal priorities in the set D1 are determined to obtain a set D2={traffic packet 11, traffic packet 21, ..., traffic packet N1}; and finally, a traffic packet (traffic packet 21) with a smallest traffic packet size is selected from D2 for scheduling and transmission. Further, if a plurality of traffic packets in D2 have a smallest data packet size (denoted as a set D3), a data packet to be scheduled and transmitted is determined based on at least one of smallest buffer space of a transmission queue corresponding to the traffic packet in D3, smallest remaining buffer space of the transmission queue corresponding to the traffic packet, or a longest waiting time of a head traffic packet of the transmission queue corresponding to the traffic packet in a buffer. It may be understood that the minimum scheduling time may specifically refer to an earliest expected or planned transmission time.

In this embodiment, when the scheduling times of the head traffic packets of the at least two of the N transmission queues are equal and the priorities of the head traffic packets of the at least two transmission queues are equal, a traffic packet with a smallest data packet size is selected as the first traffic packet for transmission based on the data packet sizes, so that a transmission sequence of the traffic packets may be optimized, to reduce a transmission waiting delay of the traffic packets, and ensure QoS requirements such as a forwarding delay and jitter of traffic. When transmission bandwidth is fixed, a smaller traffic packet has a shorter transmission time. A small traffic packet has a short transmission time, which has less influence on a transmission delay caused by a large traffic packet. For example, for two traffic packets, namely, a traffic packet of 120 bytes and a traffic packet of 1500 bytes, if the traffic packet of 1500 bytes is transmitted first, a delay of the traffic packet of 1500 bytes is increased by 12.5 times that of the traffic packet of 120 bytes. If the traffic packet of 120 bytes is transmitted first, a transmission waiting delay of the traffic packet of 120 bytes is increased by only 8% that of the traffic packet of 1500 bytes. According to the method in this embodiment, a small traffic packet may be transmitted first, so that an overall waiting delay in a data transmission process can be reduced.

In another example, the first type of traffic packets in the implementation 1 may have the following properties: A scheduling time of any traffic packet in the first type of traffic packets is equal, a difference between a priority of any traffic packet in the first type of traffic packets and a highest priority is greater than 0 and less than or equal to a second threshold, and the scheduling time of any traffic packet in the first type of traffic packets is earlier than or equal to a scheduling time of a second type of traffic packets, where the second type of traffic packets include a head traffic packet of one or more of the at least two transmission queues other than the transmission queues corresponding to the first type of traffic packets, the highest priority is a maximum value of priorities of transmission queues corresponding to a third type of traffic packets, and the third type of traffic packets include a traffic packet that is in the second type of traffic packets and whose scheduling time is equal to scheduling times of the first type of traffic packets.

The second threshold may be represented by P, and P may be 1, 2, or the like.

There may be one or more traffic packets in the first type of traffic packets. When there is one traffic packet in the first type of traffic packets, it may also be understood that the scheduling time of any traffic packet in the first type of traffic packets is equal. There may be one or more traffic packets in the third type of traffic packets.

For example, the head traffic packets of the at least two transmission queues may be classified into two types of traffic packets: the first type of traffic packets and the second type of traffic packets. The two types of traffic packets may also be understood as two traffic packet sets. The third type of traffic packets may be understood as a subset of the second type of traffic packets.

The first type of traffic packets with the properties in terms of the scheduling times and priorities may be understood as traffic packets with equal scheduling times and a small priority difference.

A scenario is used as an example for description. It is assumed that three transmission queues in the N transmission queues have traffic to be transmitted, that is, the at least two transmission queues are three transmission queues. The traffic transmission apparatus determines scheduling times (T₁₁, T₂₁, and T₃₁) of head traffic packets (traffic packet 11, traffic packet 21, and traffic packet 31) of the three transmission queues in the N transmission queues by performing step 101. The scheduling times (T₁₁, T₂₁, and T₃₁) of the head traffic packets (traffic packet 11, traffic packet 21, and traffic packet 31) of the three transmission queues are equal, that is, T₁₁=T₂₁=T₃₁. The traffic transmission apparatus obtains priorities (P₁₁, P₂₁, and P₃₁) of the three transmission queues (Q₁, Q₂, and Q₃) and data packet sizes (S₂₁, S₁₁, and S₃₁) of the head traffic packets by performing step 102. The priorities (P₁₁, P₂₁, and P₃₁) of the three transmission queues (Q₁, Q₂, and Q₃) have a following relationship: P₁₁>P₂₁=P₃₁, and a difference between P₁₁ and P₂₁ is within P levels. The data packet sizes (S₂₁, S₁₁, and S₃₁) of the head traffic packets of the three transmission queues (Q₁, Q₂, and Q₃) have a following relationship: S₃₁<S₂₁<S₁₁. Based on the implementation 1 of step 103 and the properties (the scheduling times are equal and the priorities are not much different) of the first type of traffic packets, it can be determined that the first type of traffic packets in this embodiment include the traffic packet 21 and the traffic packet 31, and the third type of traffic packets include the traffic packet 11. A traffic packet whose data packet size meets a preset size condition in the first type of traffic packets is used as the first traffic packet, for example, a traffic packet with a smallest data packet size in the first type of traffic packets is used as the first traffic packet, that is, the traffic packet 31 is used as the first traffic packet, and the first traffic packet is transmitted. The traffic packet transmission method in this application is repeatedly performed to determine a next traffic packet to be transmitted.

For example, for the foregoing scenario, in this embodiment of this application, the first traffic packet may be determined through the following steps: First, a set D1={traffic packet 11, traffic packet 21, traffic packet 31} of traffic packets that have minimum and equal scheduling times is obtained through filtering; and then, a traffic packet P0={traffic packet 11} that has the highest priority in the set D1 is determined, and traffic packets whose priorities have a difference within P levels from the priority of P0 are determined to obtain a set D2={traffic packet 21, traffic packet 31}. If D2 is an empty set, the traffic packet P0 is preferentially scheduled. If D2 is a non-empty set, the smallest traffic packet in D2 is preferentially scheduled. If a plurality of traffic packets in D2 have a smallest data packet size (denoted as a set D3), a data packet to be scheduled and transmitted is determined based on at least one of a highest priority of the traffic packet in D3, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

In this embodiment, when the scheduling times of the head traffic packets of the at least two of the N transmission queues are equal and the priorities are not much different, a traffic packet with a smallest data packet size is selected as the first traffic packet for transmission based on the data packet sizes, so that a transmission sequence of the traffic packets may be optimized, to reduce a transmission waiting delay of the traffic packets, and ensure QoS requirements such as a forwarding delay and jitter of traffic.

In another example, the first type of traffic packets in the foregoing implementation 1 may have the following properties: The head traffic packets of the at least two transmission queues include the first type of traffic packets and a second type of traffic packets, a difference between a scheduling time of any traffic packet in the first type of traffic packets and a minimum scheduling time of the second type of traffic packets is greater than 0 and less than or equal to a first threshold, and a difference between a priority of any traffic packet in the first type of traffic packets and a priority of a traffic packet corresponding to the minimum scheduling time is greater than 0 and less than or equal to a second threshold.

The first threshold may be represented by T, and T may be 2, 3, or the like. For descriptions of the second threshold, refer to the foregoing embodiments, and details are not described herein again.

The first type of traffic packets with the properties in terms of the scheduling times and priorities may be understood as traffic packets with a small scheduling time difference and a small priority difference.

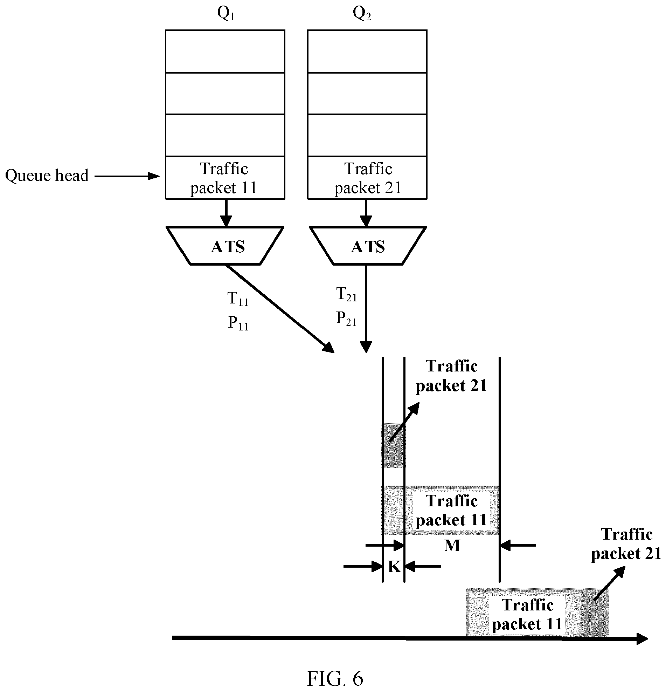

A scenario shown in FIG. 6 is used as an example for description. FIG. 6 is a schematic diagram of scheduling of the traffic transmission method according to this embodiment of this application. As shown in FIG. 6, it is assumed that two transmission queues in the N transmission queues have traffic to be transmitted, that is, the at least two transmission queues are two transmission queues. The traffic transmission apparatus performs the foregoing step 101 to determine scheduling times (T₁₁ and T₂₁) of the head traffic packets (traffic packet 11 and traffic packet 21) of the two transmission queues in the N transmission queues. A relationship between the scheduling times (T₁₁ and T₂₁) of the head traffic packets (traffic packet 11 and traffic packet 21) of the two transmission queues is as follows: 0<T₂₁-T₁₁<T. The traffic transmission apparatus performs the foregoing step 102 to obtain priorities (P₁₁ and P₂₁) of the two transmission queues (Q₁ and Q₂) and data packet sizes (S₂₁ and S₁₁) of the head traffic packets. A relationship between the priorities (P₁₁ and P₂₁) of the two transmission queues (Q₁ and Q₂) is as follows: A priority difference between P₂₁ and P₁₁ is within P levels. A relationship between the data packet sizes (S₁₁ and S₂₁) of the head traffic packets of the two transmission queues (Q₁ and Q₂) is as follows: S₂₁≤K and S₁₁-S₂₁>M. Based on the implementation 1 of step 103 and the properties (the scheduling times are not much different and the priorities are not much different) of the first type of traffic packets, it can be determined that the first type of traffic packets in this embodiment include the traffic packet 21, and the second type of traffic packets include the traffic packet 11. Because the first type of traffic packets include only one traffic packet, the traffic packet 21 may be used as the first traffic packet, and the first traffic packet is transmitted. If the first type of traffic packets include a plurality of traffic packets, a traffic packet whose data packet size meets a preset size condition in the first type of traffic packets is used as the first traffic packet, for example, a traffic packet with a smallest data packet size in the first type of traffic packets is used as the first traffic packet, and the first traffic packet is transmitted. The traffic packet transmission method in this application is repeatedly performed to determine a next traffic packet to be transmitted. For example, the next traffic packet to be transmitted is the traffic packet 11. In this case, as shown in FIG. 6, the traffic packet 11 is transmitted after the traffic packet 21.

For example, for the foregoing scenario, in this embodiment of this application, the first traffic packet may be determined through the following steps: First, a traffic packet P0={traffic packet 11} with a minimum scheduling time is obtained through filtering; then, a set D 1={traffic packets 21} of traffic packets whose scheduling times have a difference less than T from the scheduling time of P0 is obtained through filtering; a set D2={traffic packets 21} of traffic packets whose priorities have a difference within P levels from a priority of P0 is obtained from D1 through filtering; and if D2 is an empty set, the traffic packet P0 is preferentially scheduled, or if D2 is a non-empty set, the traffic packet P0={traffic packet 11} with a smallest traffic packet size in D2 is preferentially transmitted. If a plurality of traffic packets in D2 have a smallest data packet size (denoted as a set D3), a data packet to be scheduled and transmitted is determined based on at least one of a smallest scheduling time of the traffic packet in D3, a highest priority of the traffic packet, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

In this embodiment, when the scheduling times of the head traffic packets of the at least two of the N transmission queues are not much different and the priorities are not much different, a traffic packet with a smallest data packet size is selected as the first traffic packet for transmission based on the data packet sizes, so that a transmission sequence of the traffic packets may be optimized, to reduce a transmission waiting delay of the traffic packets, and ensure QoS requirements such as a forwarding delay and jitter of traffic.

In another example, the first type of traffic packets in the foregoing implementation 1 may have the following properties: A difference between priorities of any two traffic packets in the first type of traffic packets is less than or equal to the second threshold, where the scheduling times of the first type of traffic packets are a minimum scheduling time, the first type of traffic packets include a traffic packet with a highest priority, the minimum scheduling time is a minimum value of the scheduling times of the head traffic packets of the at least two transmission queues, and the highest priority is a maximum value of priorities of transmission queues corresponding to the traffic packets with the minimum scheduling time. Alternatively, a difference between scheduling times of any two traffic packets in the first type of traffic packets is less than or equal to the first threshold, and a difference between priorities of any two traffic packets in the first type of traffic packets is less than or equal to the second threshold, where a minimum value of the scheduling times of the first type of traffic packets is a minimum value of the scheduling times of the head traffic packets of the at least two transmission queues, the first type of traffic packets include a traffic packet with a highest priority, and the highest priority is a maximum value of a priority corresponding to a traffic packet whose scheduling time has a difference less than or equal to the first threshold from the minimum value.

For descriptions of the first threshold and the second threshold, refer to the foregoing embodiments, and details are not described herein again.

It should be noted that the first type of traffic packets may include one or more traffic packets.

A scenario is used as an example for description. It is assumed that three transmission queues in the N transmission queues have traffic to be transmitted, that is, the at least two transmission queues are three transmission queues. The traffic transmission apparatus determines scheduling times (T₁₁, T₂₁, and T₃₁) of head traffic packets (traffic packet 11, traffic packet 21, and traffic packet 31) of the three transmission queues by performing step 101. The scheduling times (T₁₁, T₂₁, and T₃₁) of the head traffic packets (traffic packet 11, traffic packet 21, and traffic packet 31) of the three transmission queues are equal, that is, T₁₁=T₂₁=T₃₁. The traffic transmission apparatus obtains priorities (P₁₁, P₂₁, and P₃₁) of the three transmission queues (Q₁, Q₂, and Q₃) and data packet sizes (S₂₁, S₁₁, and S₃₁) of the head traffic packets by performing step 102. The priorities (P₁₁, P₂₁, and P₃₁) of the three transmission queues (Q₁, Q₂, and Q₃) have a following relationship: P₁₁>P₂₁>P₃₁. In addition, a difference between P₁₁ and P₂₁ is within P levels, and a difference between P₁₁ and P₃₃ is greater than P levels. The data packet sizes (S₂₁, S₁₁, and S₃₁) of the head traffic packets of the three transmission queues (Q₁, Q₂, and Q₃) have a following relationship: S₁₁<S₂₁=S₃₁. Based on the implementation 1 of step 103 and the properties of the first type of traffic packets, it can be determined that the first type of traffic packets in this embodiment include the traffic packet 11 and the traffic packet 21. A traffic packet whose data packet size meets a preset size condition in the first type of traffic packets is used as the first traffic packet, for example, a traffic packet with a smallest data packet size in the first type of traffic packets is used as the first traffic packet, that is, the traffic packet 11 is used as the first traffic packet, and the first traffic packet is transmitted. The traffic packet transmission method in this application is repeatedly performed to determine a next traffic packet to be transmitted. For example, the next traffic packet to be transmitted is the traffic packet 21, and the traffic packet 21 is transmitted after the traffic packet 11.

For example, for the foregoing scenario, in this embodiment of this application, the first traffic packet may be determined through the following steps: First, a set D1={traffic packet 11, traffic packet 21, traffic packet 31} of traffic packets that have minimum and equal scheduling times is obtained through filtering; then, a traffic packet P0={traffic packet 11} that has the highest priority in the set D1 is determined; and then, a set D2={traffic packet 11, traffic packet 21} of traffic packets whose priorities have a difference within P levels from the priority of P0 is obtained from D1 through filtering, and a traffic packet with a smallest data packet size in D2 is preferentially transmitted. If a plurality of traffic packets in D2 have a smallest data packet size (denoted as a set D3), a data packet to be scheduled and transmitted is determined based on at least one of a highest priority of the traffic packet in D3, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

### Implementation 2

In another implementation, namely, the implementation 2, the traffic transmission apparatus determines the first type of traffic packets from the head traffic packets of the at least two transmission queues based on the scheduling times of the at least two transmission queues, the priorities, and the data packet sizes, and a traffic packet whose data packet size meets a preset size condition in the first type of traffic packets is used as the first traffic packet.

The preset size condition may be that the data packet size is minimum, the data packet size is less than a threshold, or the like, which may be flexibly set according to a requirement.

In an example, the first type of traffic packets in the implementation 2 may have the following properties: A scheduling time of any traffic packet in the first type of traffic packets is equal, a difference between a priority of any traffic packet in the first type of traffic packets and a highest priority is greater than 0 and less than or equal to a second threshold, and the scheduling time of any traffic packet in the first type of traffic packets is earlier than or equal to a scheduling time of a second type of traffic packets, where the second type of traffic packets include a head traffic packet of one or more of the at least two transmission queues other than the transmission queues corresponding to the first type of traffic packets, the highest priority is a maximum value of priorities of transmission queues corresponding to a third type of traffic packets, and the third type of traffic packets include a traffic packet that is in the second type of traffic packets and whose scheduling time is equal to scheduling times of the first type of traffic packets. In addition, a size of any traffic packet in the first type of traffic packets meets at least one of the following: The size is less than or equal to a third threshold; or a difference between the size and a size of a traffic packet corresponding to the highest priority is greater than or equal to a fourth threshold.

There may be one or more traffic packets in the first type of traffic packets. When there is one traffic packet in the first type of traffic packets, it may also be understood that the scheduling time of any traffic packet in the first type of traffic packets is equal. There may be one or more traffic packets in the third type of traffic packets. For example, the head traffic packets of the at least two transmission queues may be classified into two types of traffic packets: the first type of traffic packets and the second type of traffic packets. The two types of traffic packets may also be understood as two traffic packet sets. The third type of traffic packets may be understood as a subset of the second type of traffic packets.

The difference between the size of any traffic packet and the size of the traffic packet corresponding to the highest priority is greater than or equal to the fourth threshold may mean that a value obtained by subtracting any traffic packet in the first type of traffic packets from the traffic packet corresponding to the highest priority is greater than or equal to the fourth threshold.

The first type of traffic packets with the properties in terms of the scheduling times, the priorities, and the data packet sizes may be understood as traffic packets with equal scheduling times, a small priority difference, and data packet sizes having the following properties: The data packet sizes are small, and/or the data packet sizes differ greatly from the size of the traffic packet corresponding to the highest priority.

The third threshold may be represented by K, and K may be 100 bytes, 90 bytes, or the like. The fourth threshold may be represented by M, and M may be 300 bytes, 350 bytes, or the like. The two thresholds may be flexibly set according to a requirement, and are not specifically limited in this embodiment of this application. For descriptions of the second threshold, refer to the foregoing embodiments, and details are not described herein again.

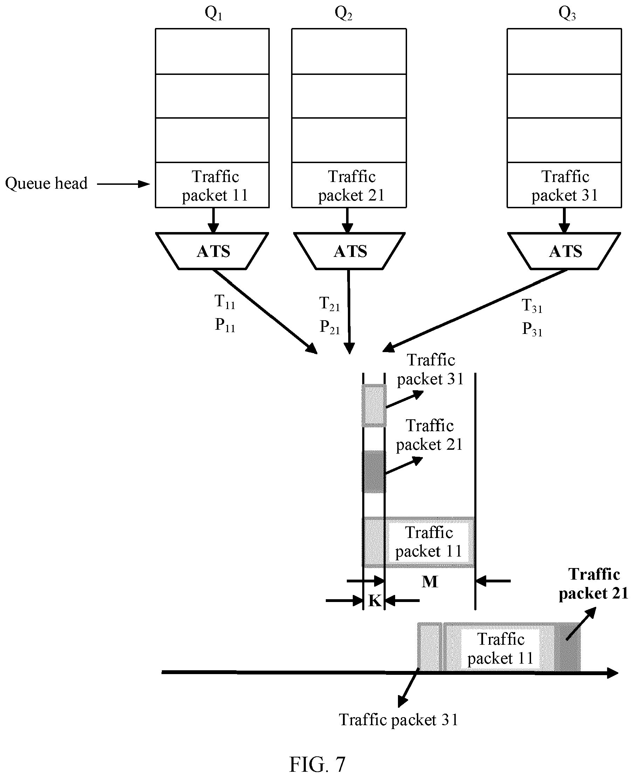

A scenario shown in FIG. 7 is used as an example for description. FIG. 7 is a schematic diagram of scheduling of the traffic transmission method according to this embodiment of this application. As shown in FIG. 7, it is assumed that all of the N transmission queues have traffic to be transmitted, that is, the at least two transmission queues are N transmission queues. The traffic transmission apparatus determines scheduling times (T₁₁, T₂₁, and T₃₁) of head traffic packets (traffic packet 11, traffic packet 21, and traffic packet 31) of three transmission queues in the N transmission queues by performing step 101. The scheduling times (T₁₁, T₂₁, and T₃₁) of the head traffic packets (traffic packet 11, traffic packet 21, and traffic packet 31) of the three transmission queues are equal, that is, T₁₁=T₂₁=T₃₁. The traffic transmission apparatus obtains priorities (Pn, P₂₁, and P₃₁) of the three transmission queues (Q₁, Q₂, and Q₃) and data packet sizes (S₂₁, S₁₁, and S₃₁) of the head traffic packets by performing step 102. The priorities (Pn, P₂₁, and P₃₁) of the three transmission queues (Q₁, Q₂, and Q₃) have a following relationship: P₁₁>P₂₁>P₃₁. In addition, a difference between P₁₁ and P₂₁ is within P levels, and a difference between P₁₁ and P₃₁ is greater than P levels. The data packet sizes (S₂₁, S₁₁, and S₃₁) of the head traffic packets of the three transmission queues (Q₁, Q₂, and Q₃) have following relationships: S₂₁=S₃₁≤K<S₁₁, and S₁₁-S₂₁≥M. Based on the implementation 2 of step 103 (to be specific, based on the scheduling times, the priorities, and the data packet sizes) and the properties (the properties in terms of the scheduling times and the priorities, and a property of a small data packet size) of the first type of traffic packets, it can be determined that, in this embodiment, the highest priority is P₁₁, the first type of traffic packets include the traffic packet 21, the second type of traffic packets include the traffic packet 11 and the traffic packet 31, and the third type of traffic packets include the traffic packet 11 and the traffic packet 31. In this embodiment, if the first type of traffic packets include only one traffic packet, namely, the traffic packet 21, the traffic packet 21 may be used as the first traffic packet. If the first type of traffic packets include a plurality of traffic packets, a traffic packet whose data packet size meets a preset size condition in the first type of traffic packets may be used as the first traffic packet, for example, a traffic packet with a smallest data packet size in the first type of traffic packets is used as the first traffic packet. The traffic packet transmission method in this application is repeatedly performed to determine a next traffic packet to be transmitted. For example, the next traffic packet to be transmitted is the traffic packet 11. In this case, as shown in FIG. 7, the traffic packet 11 is transmitted after the traffic packet 21.

For example, for the foregoing scenario, in this embodiment of this application, the first traffic packet may be determined through the following algorithm steps: First, a set D1={traffic packet 11, traffic packet 21, traffic packet 31} of traffic packets that have minimum and equal scheduling times is obtained through filtering; and then, a traffic packet P0={traffic packet 11} that has the highest priority in the set D1 is determined, and traffic packets whose priorities have a difference within P levels from the priority of P0 are determined to obtain a set D2={traffic packets 21}. If D2 is an empty set, the traffic packet P0 is preferentially scheduled. If D2 is a non-empty set, it may be determined whether D2={traffic packets 21} includes a data packet size less than or equal to K. If there is a data packet size less than or equal to K, a traffic packet with a smallest data packet size in D2 is preferentially transmitted. If there is no data packet size less than or equal to K, the traffic packet P0={traffic packet 11} is preferentially transmitted. If a plurality of traffic packets in D2 have a smallest data packet size (denoted as a set D3), a data packet to be scheduled and transmitted is determined based on at least one of a highest priority of the traffic packet in D3, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

In another example, it is assumed that three transmission queues in the N transmission queues have traffic to be transmitted, that is, the at least two transmission queues are three transmission queues. The traffic transmission apparatus determines scheduling times (T₁₁, T₂₁, and T₃₁) of head traffic packets (traffic packet 11, traffic packet 21, and traffic packet 31) of the three transmission queues in the N transmission queues by performing step 101. The scheduling times (T₁₁, T₂₁, and T₃₁) of the head traffic packets (traffic packet 11, traffic packet 21, and traffic packet 31) of the three transmission queues are equal, that is, T₁₁=T₂₁=T₃₁. The traffic transmission apparatus obtains priorities (P₁₁, P₂₁, and P₃₁) of the three transmission queues (Q₁, Q₂, and Q₃) and data packet sizes (S₂₁, S₁₁, and S₃₁) of the head traffic packets by performing step 102. The priorities (P₁₁, P₂₁, and P₃₁) of the three transmission queues (Q₁, Q₂, and Q₃) have a following relationship: P₁₁>P₂₁=P₃₁. In addition, a difference between P₁₁ and P₂₁ is within P levels. The data packet sizes (S₂₁, S₁₁, and S₃₁) of the head traffic packets of the three transmission queues (Q₁, Q₂, and Q₃) have following relationships: S₁₁-S₂₁>M, and S₁₁-S₃₁<M. Based on the implementation 2 of step 103 and the properties (the properties in terms of the scheduling times and the priorities, and a property of a large data packet size difference) of the first type of traffic packets, it can be determined that, in this embodiment, the first type of traffic packets include the traffic packet 21, and the third type of traffic packets include the traffic packet 11 and the traffic packet 31. In this embodiment, if the first type of traffic packets include only one traffic packet, namely, the traffic packet 21, the traffic packet 21 may be used as the first traffic packet. If the first type of traffic packets include a plurality of traffic packets, a traffic packet whose data packet size meets a preset size condition in the first type of traffic packets may be used as the first traffic packet, for example, a traffic packet with a smallest data packet size in the first type of traffic packets is used as the first traffic packet. The traffic packet transmission method in this application is repeatedly performed to determine a next traffic packet to be transmitted.

For example, for the foregoing scenario, in this embodiment of this application, the first traffic packet may be determined through the following algorithm steps: First, a set D1={traffic packet 11, traffic packet 21, traffic packet 31} of traffic packets that have minimum and equal scheduling times is obtained through filtering; and then, a traffic packet P0={traffic packet 11} that has the highest priority in the set D1 is determined, and traffic packets whose priorities have a difference within P levels from the priority of P0 are determined to obtain a set D2={traffic packet 21, traffic packet 31}. If D2 is an empty set, the traffic packet P0 is preferentially scheduled. If D2 is a non-empty set, it may be determined whether D2 includes a traffic packet (denoted as a set D3) whose data packet size is more than M bytes less than the data packet size of P0. If D2 includes a traffic packet whose data packet size is more than M bytes less than the data packet size of P0, a traffic packet with a smallest data packet size in D3 is preferentially transmitted. If D2 does not include a traffic packet whose data packet size is more than M bytes less than the data packet size of P0, the traffic packet P0={traffic packet 11} is preferentially transmitted. If a plurality of traffic packets in D3 have a smallest data packet size (denoted as a set D4), a data packet to be scheduled and transmitted is determined based on at least one of a highest priority of the traffic packet in D4, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

In this embodiment, when the scheduling times of the head traffic packets of the at least two of the N transmission queues are equal and the priorities are not much different, a traffic packet with a smaller size is selected as the first traffic packet for transmission based on the data packet sizes, so that a transmission sequence of the traffic packets may be optimized, to reduce a transmission waiting delay of the traffic packets, reduce a transmission delay impact degree between different traffic packets, and ensure QoS requirements such as a forwarding delay and jitter of traffic.

In another implementation, the first type of traffic packets in the foregoing implementation 2 may have the following properties: The head traffic packets of the at least two transmission queues include the first type of traffic packets and a second type of traffic packets, a difference between a scheduling time of any traffic packet in the first type of traffic packets and a minimum scheduling time of the second type of traffic packets is greater than 0 and less than or equal to a first threshold, and a difference between a priority of any traffic packet in the first type of traffic packets and a priority of a traffic packet corresponding to the minimum scheduling time is greater than 0 and less than or equal to a second threshold. In addition, a size of any traffic packet in the first type of traffic packets meets at least one of the following: The size is less than or equal to a third threshold; or a difference between the size and a size of the traffic packet corresponding to the minimum scheduling time is greater than or equal to a fourth threshold.

In some embodiments, the difference between the size of any traffic packet and the size of the traffic packet corresponding to the minimum scheduling time is greater than or equal to the fourth threshold may mean that a value obtained by subtracting any traffic packet in the first type of traffic packets from the traffic packet corresponding to the minimum scheduling time is greater than or equal to the fourth threshold.

The first type of traffic packets with the properties in terms of the scheduling times, the priorities, and the data packet sizes may be understood as traffic packets with a small scheduling time difference, a small priority difference, and data packet sizes having the following properties: The data packet sizes are small, and/or the data packet sizes differ greatly from the size of the traffic packet corresponding to the minimum scheduling time.

For descriptions of the first threshold, the second threshold, the third threshold, and the fourth threshold, refer to the foregoing embodiments, and details are not described herein again.

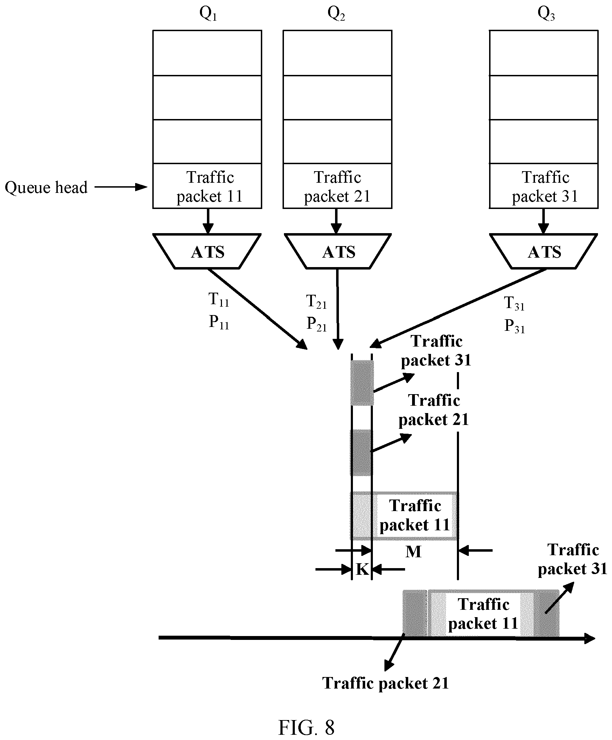

In another example, a scenario shown in FIG. 8 is used as an example for description. FIG. 8 is a schematic diagram of scheduling of the traffic transmission method according to this embodiment of this application. As shown in FIG. 8, it is assumed that three transmission queues in the N transmission queues have traffic to be transmitted, that is, the at least two transmission queues are three transmission queues. The traffic transmission apparatus determines scheduling times (T₁₁, T₂₁, and T₃₁) of head traffic packets (traffic packet 11, traffic packet 21, and traffic packet 31) of the three transmission queues in the N transmission queues by performing step 101. A relationship of the scheduling times (T₁₁, T₂₁, and T₃₁) of the head traffic packets (traffic packet 11, traffic packet 21, and traffic packet 31) of the three transmission queues is as follows: T₁₁<T₂₁=T₃₁, and O<T₂₁-T₁₁<T. The traffic transmission apparatus obtains priorities (Pn, P₂₁, and P₃₁) of the three transmission queues (Q₁, Q₂, and Q₃) and data packet sizes (S₂₁, S₁₁, and S₃₁) of the head traffic packets by performing step 102. The priorities (P₁₁, P₂₁, and P₃₁) of the three transmission queues (Q₁, Q₂, and Q₃) have following relationships: P₁₁>P₂₁, and P₁₁>P₃₁. In addition, a difference between P₃₁ and P₁₁ and a difference between P₂₁ and P₁₁ are within P levels. The data packet sizes (S₂₁, S₁₁, and S₃₁) of the head traffic packets of the three transmission queues (Q₁, Q₂, and Q₃) have following relationships: S₂₁=S₃₁≤K<S₁₁, and S₁₁-S₂₁≥M. Based on the implementation 2 of step 103 and the properties (the priorities in terms of the scheduling times and the priorities, and a property of a small data packet size) of the first type of traffic packets, it can be determined that the first type of traffic packets in this embodiment include the traffic packet 21 and the traffic packet 31, and the second type of traffic packets include the traffic packet 11. A traffic packet whose data packet size meets a preset size condition in the first type of traffic packets is used as the first traffic packet, for example, a traffic packet with a smallest data packet size in the first type of traffic packets is used as the first traffic packet. To be specific, because the traffic packet 21 and the traffic packet 31 each are a traffic packet with the smallest data packet size, the priorities of the transmission queues corresponding to the traffic packet 21 and the traffic packet 31 may further be compared, to select a traffic packet with a higher priority as the first traffic packet, for example, if P₃₁> P₂₁, the traffic packet 31 is used as the first traffic packet, and the first traffic packet is transmitted. The traffic packet transmission method in this application is repeatedly performed to determine a next traffic packet to be transmitted. For example, the next traffic packet to be transmitted is the traffic packet 11. In this case, as shown in FIG. 8, the traffic packet 11 is transmitted after the traffic packet 31.

For example, for the foregoing scenario, in this embodiment of this application, the first traffic packet may be determined through the following steps: First, a traffic packet P0={traffic packet 11} with a minimum scheduling time is obtained through filtering; then, traffic packets whose scheduling times have a difference less than T from the scheduling time of P0 are determined to obtain a set D1={traffic packet 21, traffic packet 31}; a set D2={traffic packet 21, traffic packet 31} of traffic packets whose priorities have a difference within P levels from a priority of P0 is obtained from D1 through filtering; and if D2 is an empty set, the traffic packet P0 is preferentially scheduled, or if D2 is a non-empty set, traffic packets (denoted as a set D3) whose data packet sizes are less than K are obtained from D2={traffic packet 21, traffic packet 31} through filtering. If D3 is an empty set, P0 is preferentially transmitted; otherwise, a data packet with a smallest traffic packet size in D3 is preferentially transmitted. If a plurality of traffic packets in D3 have a smallest data packet size (denoted as a set D4), a data packet to be scheduled and transmitted is determined based on at least one of a highest priority of the traffic packet in D4, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

In this embodiment, when the scheduling times of the head traffic packets of the at least two of the N transmission queues are not much different and the priorities are not much different, a traffic packet with a smaller size is selected as the first traffic packet for transmission based on the data packet sizes, so that a transmission sequence of the traffic packets may be optimized, to reduce a transmission waiting delay of the traffic packets, reduce a transmission delay impact degree between different traffic packets, and ensure QoS requirements such as a forwarding delay and jitter of traffic.

### Implementation 3

In another possible implementation, namely, the implementation 3, the traffic transmission apparatus determines the first type of traffic packets from the head traffic packets of the at least two transmission queues based on the scheduling times of the at least two transmission queues and the data packet sizes of the head traffic packets, and a traffic packet whose data packet size meets a preset size condition in the first type of traffic packets is used as the first traffic packet.

The first type of traffic packets in the implementation 3 may have a following property: traffic packets whose scheduling times are equal and whose data packet sizes differ greatly from a data packet size of a traffic packet with a minimum scheduling time; traffic packets whose scheduling times are equal and whose data packet sizes are relatively small; traffic packets whose scheduling times are not much different from the minimum scheduling time and whose data packet sizes differ greatly from the data packet size of the traffic packet with the minimum scheduling time; or traffic packets whose scheduling times are not much different from the minimum scheduling time and whose data packet sizes are relatively small. The minimum scheduling time is a minimum value of the scheduling times of the head traffic packets of the at least two transmission queues.

For example, for the foregoing scenario, in this embodiment of this application, the first traffic packet may be determined through the following steps: First, the traffic packet P0 with the minimum scheduling time is obtained through filtering, and a set D 1 of traffic packets whose scheduling times have a difference less than T from the scheduling time of P0 is obtained through filtering; a traffic packet whose data packet size is less than M bytes smaller than a data packet size of the traffic packet P0 and a traffic packet whose data packet size is greater than the data packet size of the traffic packet P0 are removed from D1, to obtain a traffic packet set D2; and if D2 is an empty set, the traffic packet P0 is preferentially transmitted, or if D2 is a non-empty set, a traffic packet with a smallest data packet size in D2 is preferentially transmitted. If a plurality of traffic packets in D2 have a smallest data packet size (denoted as a set D3), a data packet to be scheduled and transmitted is determined based on at least one of a highest priority of the traffic packet in D3, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

In another example, the traffic transmission apparatus determines scheduling times (T₁₁, T₂₁, and T₃₁) of head traffic packets (traffic packet 11, traffic packet 21, and traffic packet 31) of three transmission queues in the N transmission queues by performing step 101. A relationship of the scheduling times (T₁₁, T₂₁, and T₃₁) of the head traffic packets (traffic packet 11, traffic packet 21, and traffic packet 31) of the three transmission queues is as follows: T₁₁<T₂₁=T₃₁, and O<T₂₁-T₁₁<T The traffic transmission apparatus obtains priorities (Pn, P₂₁, and P₃₁) of the three transmission queues (Q₁, Q₂, and Q₃) and data packet sizes (S₂₁, Sn, and S₃₁) of the head traffic packets by performing step 102. The priorities (P₁₁, P₂₁, and P₃₁) of the three transmission queues (Q₁, Q₂, and Q₃) have following relationships: P₁₁>P₂₁, and P₁₁>P₃₁. In addition, a difference between P₃₁ and P₁₁ and a difference between P₂₁ and P₁₁ are within P levels. The data packet sizes (S₂₁, S₁₁, and S₃₁) of the head traffic packets of the three transmission queues (Q₁, Q₂, and Q₃) have following relationships: S₁₁>S₂₁=S₃₁, and S₁₁-S₂₁≥M. Based on the implementation 3 of step 103 and the properties (the scheduling times are not much different and the data packet sizes differ greatly) of the first type of traffic packets, it can be determined that the first type of traffic packets in this embodiment include the traffic packet 11, the traffic packet 21, and the traffic packet 31. A traffic packet whose data packet size meets a preset size condition in the first type of traffic packets is used as the first traffic packet, for example, a traffic packet with a smallest data packet size in the first type of traffic packets is used as the first traffic packet. Because the first type of traffic packets include two traffic packets with the smallest data packet size, namely, the traffic packet 21 and the traffic packet 31, the first traffic packet may alternatively be determined based on at least one of a highest priority of the traffic packet, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer. The first traffic packet is transmitted. The traffic packet transmission method in this application is repeatedly performed to determine a next traffic packet to be transmitted.

For example, for the foregoing scenario, in this embodiment of this application, the first traffic packet may be determined through the following steps: First, the traffic packet P0={traffic packet 11} with the minimum scheduling time is obtained through filtering, and a set D 1= f traffic packet 11, traffic packet 21, traffic packet 31} of traffic packets whose scheduling times have a difference less than T from the scheduling time of P0 is obtained through filtering; a traffic packet whose data packet size is less than M bytes smaller than a data packet size of P0 and a traffic packet whose data packet size is greater than the data packet size of P0 are removed from D1, to obtain a traffic packet set D2={traffic packet 11, traffic packet 21, traffic packet 31}; and a traffic packet with a smallest data packet size in D2 is preferentially transmitted. If a plurality of traffic packets in D2 have a smallest data packet size (denoted as a set D3), a data packet to be scheduled and transmitted is determined based on at least one of a highest priority of the traffic packet in D3, smallest buffer space of a transmission queue corresponding to the traffic packet, smallest remaining buffer space of the transmission queue corresponding to the traffic packet, or a longest waiting time of a head traffic packet of the transmission queue corresponding to the traffic packet in a buffer.

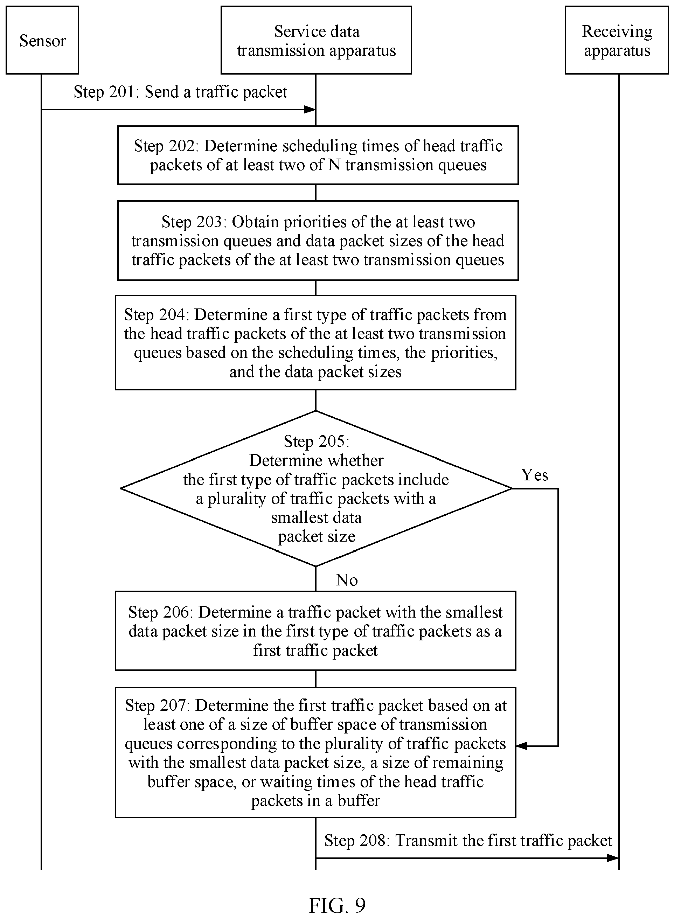

FIG. 9 is a flowchart of another traffic transmission method according to an embodiment of this application. As shown in FIG. 9, the method in this embodiment may include the following steps.

Step 201: A sensor sends a traffic packet to a traffic transmission apparatus.

Step 202: The traffic transmission apparatus determines scheduling times of head traffic packets of at least two of N transmission queues, where N is a positive integer greater than or equal to 2.

Step 203: The traffic transmission apparatus obtains priorities of the at least two transmission queues and data packet sizes of the head traffic packets of the at least two transmission queues.

For descriptions of step 202 and step 203, refer to step 101 and step 102 in the embodiment shown in FIG. 4. Details are not described herein again.

Step 204: A first type of traffic packets are determined from the head traffic packets of the at least two transmission queues based on the scheduling times, the priorities, and the data packet sizes.

For descriptions of step 204, refer to the foregoing embodiments, and details are not described herein again.

Step 205: Whether a plurality of traffic packets with a smallest data packet size are included in the first type of traffic packets are determined, and if no, step 206 is performed; or if yes, step 207 is performed.

Step 206: A traffic packet with a smallest data packet size in the first type of traffic packets is used as a first traffic packet.

After step 206 is performed, step 208 is performed.

Step 207: The first traffic packet is determined based on at least one of a size of buffer space of transmission queues corresponding to the plurality of traffic packets with the smallest data packet size, a size of remaining buffer space, or waiting times of the head traffic packets in a buffer.

After step 207 is performed, step 208 is performed.

Step 208: The traffic transmission apparatus transmits the first traffic packet to a receiving apparatus.

In some embodiments, an implementation of step 207 is to select, from the plurality of traffic packets with the smallest data packet size, a traffic packet that meets at least one of the following as the first traffic packet: A transmission queue corresponding to the traffic packet has smallest buffer space; a transmission queue corresponding to the traffic packet has smallest remaining buffer space; or a head traffic packet of a transmission queue corresponding to the traffic packet has a longest waiting time in the buffer.

In some embodiments, before step 207, whether scheduling times of the plurality of traffic packets with the smallest data packet size are equal may be determined. If the scheduling times are equal, whether priorities of the plurality of traffic packets with the smallest data packet sizes are equal are determined. If the priorities are equal, the first traffic packet may be determined through step 207. If priorities are not equal, a traffic packet with a highest priority in the plurality of traffic packets with the smallest data packet size may be selected as the first traffic packet. If the scheduling times are not equal, a traffic packet with a minimum scheduling time in the plurality of traffic packets with the smallest data packet size may be selected as the first traffic packet.

In this embodiment, the traffic transmission apparatus implements aggregation and forwarding of traffic packets through the following steps: determining scheduling times of head traffic packets of at least two of N transmission queues; obtaining priorities of the at least two transmission queues and data packet sizes of the head traffic packets of the at least two transmission queues; determining a first type of traffic packets from the head traffic packets of the at least two transmission queues based on the scheduling times, the priorities, and the data packet sizes; determining whether the first type of traffic packets include a plurality of traffic packets with a smallest data packet size, if no, using a traffic packet with a smallest data packet size in the first type of traffic packets as a first traffic packet, or if yes, determining the first traffic packet based on at least one of a size of buffer space of transmission queues corresponding to the plurality of traffic packets with the smallest data packet size, a size of remaining buffer space, or waiting times of the head traffic packets in a buffer; and transmitting the first traffic packet. Because traffic packets to be transmitted are determined from a plurality of transmission queues in processes of aggregation and forwarding with reference to the scheduling times, the priorities, and the data packet sizes, a transmission sequence of the traffic packets may be optimized, to reduce a transmission waiting delay of the traffic packets, and ensure QoS requirements such as a forwarding delay and jitter of traffic.

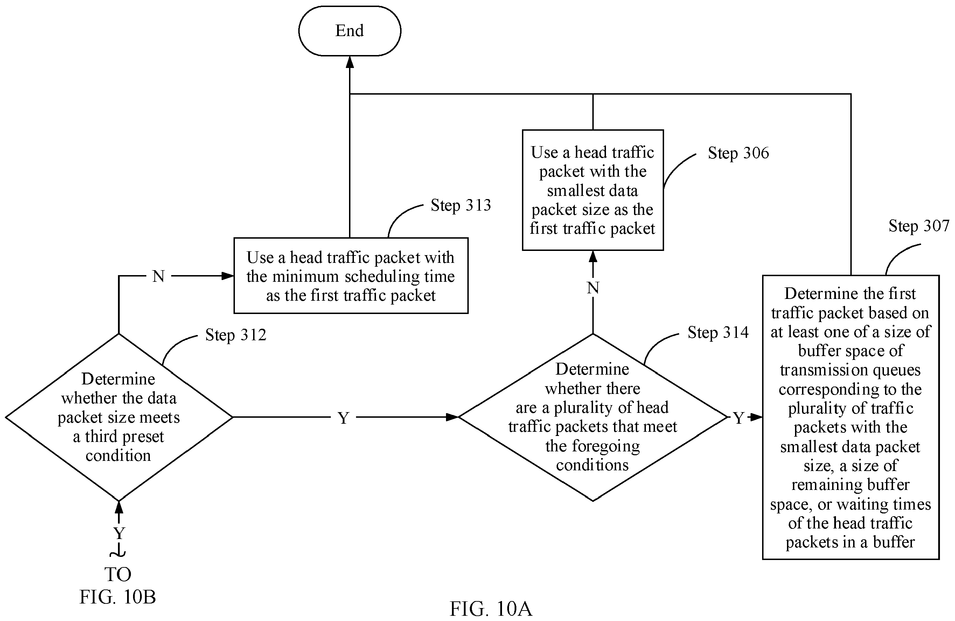

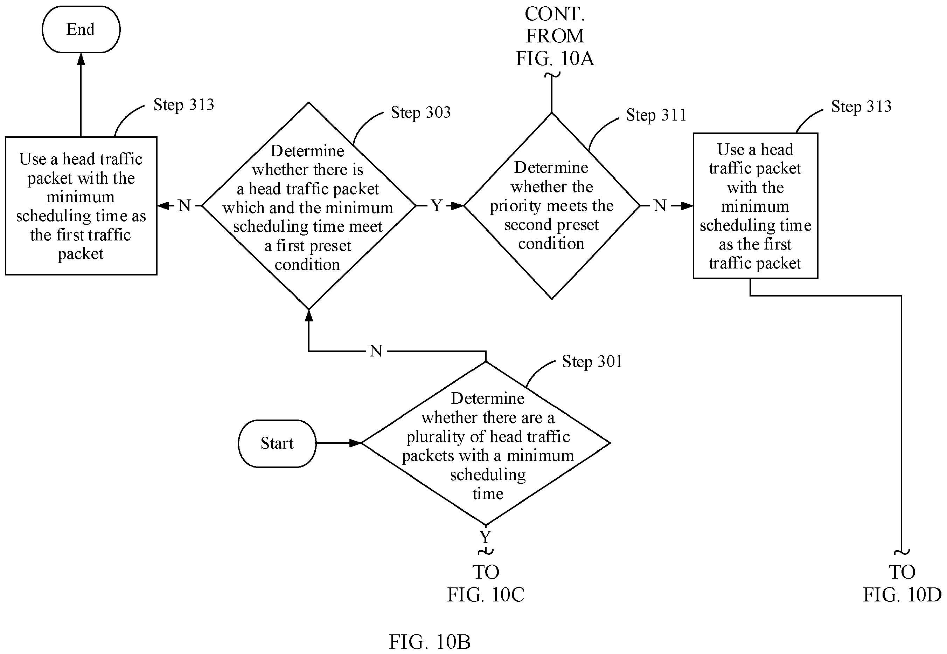

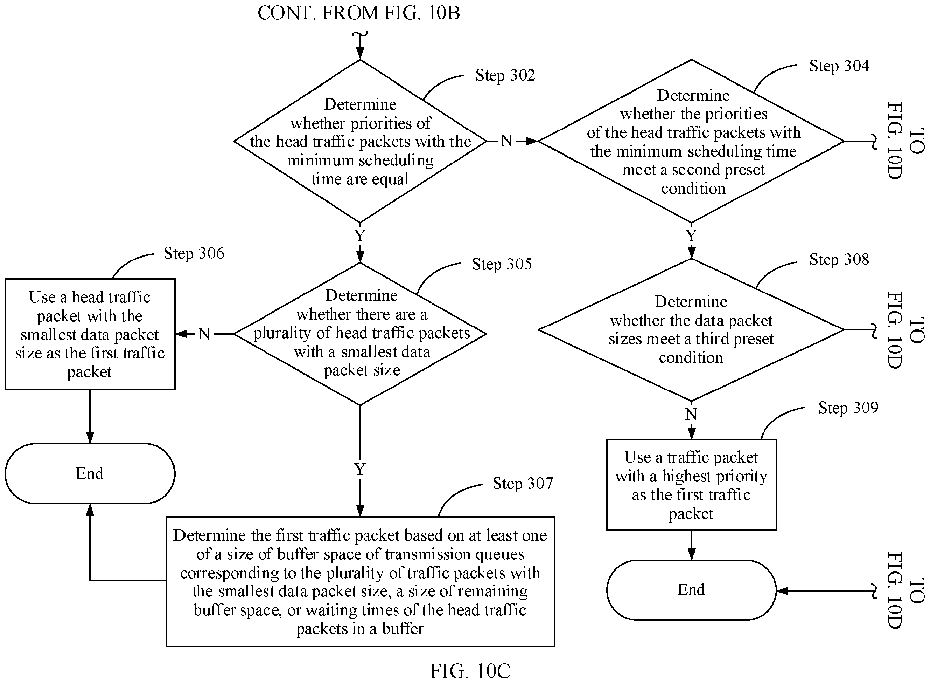

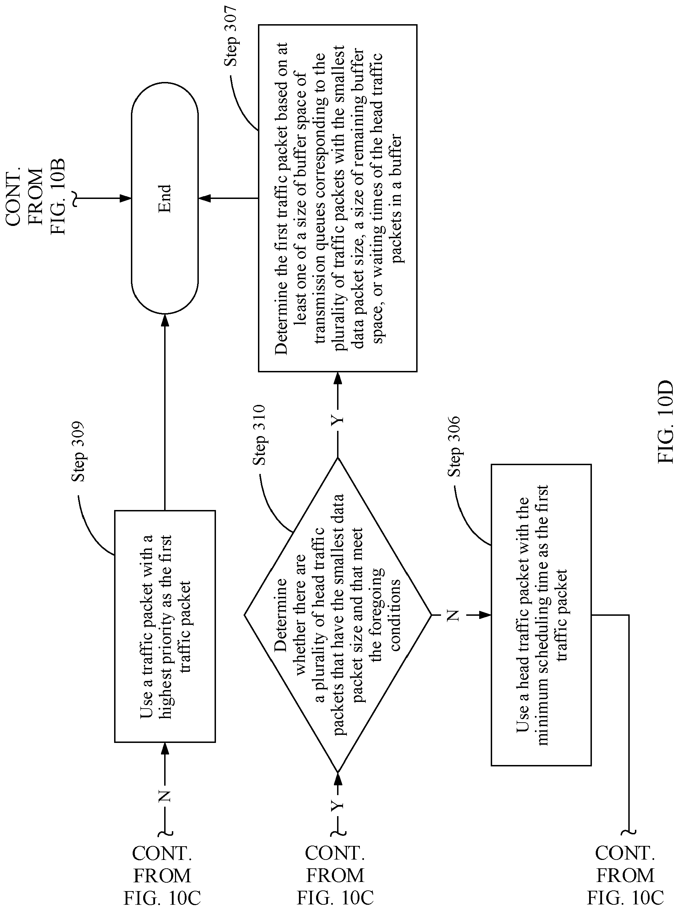

FIG. 10A, FIG. 10B, FIG. 10C and FIG. 10D are a flowchart of another traffic transmission method according to an embodiment of this application. As shown in FIG. 10A, FIG. 10B, FIG. 10C and FIG. 10D, this embodiment may be performed by a traffic transmission apparatus. This embodiment describes an implementation in which the traffic transmission apparatus determines the first traffic packet based on the scheduling times, the priorities, and the data packet sizes in the foregoing embodiment. The method in this embodiment may include the following steps.

Step 301: Determine whether there are a plurality of head traffic packets with a minimum scheduling time, and if yes, perform step 302; or if no, perform step 303.

Before step 301, the traffic transmission apparatus may determine scheduling times of head traffic packets in at least two of N transmission queues through step 102 in the foregoing embodiment, and obtain priorities of the at least two transmission queues and data packet sizes of the head traffic packets of the at least two transmission queues through step 103 in the foregoing embodiment. Then the traffic transmission apparatus starts to perform step 301.

Step 302: Determine whether priorities of the head traffic packets with the minimum scheduling time are equal, and if yes, perform step 305; or if no, perform step 304.

According to step 302, when the priorities of the head traffic packets with the minimum scheduling time are equal, the head traffic packets with the minimum scheduling time are the first type of traffic packets in the foregoing embodiment. Then, the first traffic packet is determined from the first type of traffic packets by performing the following step 305.

Step 303: Determine whether there is a head traffic packet which and the minimum scheduling time meet a first preset condition, and if yes, perform step 311; or if no, perform step 313.

For example, a difference between the first preset condition and the minimum scheduling time may be greater than 0 and less than or equal to the foregoing first threshold.

Step 304: Determine whether the priorities of the head traffic packets with the minimum scheduling time meet a second preset condition, and if yes, perform step 308; or if no, perform step 309.

For example, the second preset condition may be that a difference between the priorities of the head traffic packets with the minimum scheduling time is greater than 0 and less than or equal to a second threshold.

Step 305: Determine whether there are a plurality of head traffic packets with a smallest data packet size, and if yes, perform step 307; or if no, perform step 306.

Step 306: Use a traffic packet with the smallest data packet size as the first traffic packet.

Step 307: Determine the first traffic packet based on at least one of a size of buffer space of transmission queues corresponding to the plurality of traffic packets with the smallest data packet size, a size of remaining buffer space, or waiting times of the head traffic packets in a buffer.

Step 308: Determine whether the data packet sizes of the head traffic packets that meet the second preset condition meet a third preset condition, and if yes, perform step 310; or if no, perform step 309.

For example, the third preset condition may be that the data packet sizes are less than or equal to a third threshold. According to step 308, the first type of traffic packets in the foregoing embodiment may be determined, and then the following step 310 is performed to determine the first traffic packet in the first type of traffic packets.

Step 309: Use a traffic packet with a highest priority as the first traffic packet.

Step 310: Determine whether there are a plurality of head traffic packets that have the smallest data packet size and that meet the foregoing conditions, and if yes, perform step 307; or if no, perform step 306.

Step 311: Determine whether the priority of the head traffic packet that meets the first preset condition meets the second preset condition, and if yes, perform step 312; or if no, perform step 313.

Step 312: Determine whether the data packet size of the head traffic packet that meets the first preset condition and the second preset condition meet a third preset condition, and if yes, perform step 314; or if no, perform step 313.

According to step 312, the first type of traffic packets in the foregoing embodiment may be determined, and then the following step 314 is performed to determine the first traffic packet in the first type of traffic packets.

Step 313: Use a head traffic packet with the minimum scheduling time as the first traffic packet.

Step 314: Determine whether there are a plurality of head traffic packets that meet the foregoing conditions, and if yes, perform step 306; or if no, perform step 307.

It should be noted that, the end shown in FIG. 10A, FIG. 10B, FIG.10C and FIG. 10D means that a process of determining the first traffic packet ends, and then the first traffic packet may be transmitted through the foregoing step 104.

In this embodiment, a transmission sequence of the traffic packets may be optimized, to reduce a transmission waiting delay of the traffic packets, reduce a transmission delay impact degree between different traffic packets, and ensure QoS requirements such as a forwarding delay and jitter of traffic.

The foregoing describes in detail the traffic transmission method according to the embodiments of this application. The following describes the traffic transmission apparatus according to the embodiments of this application.

An embodiment of this application describes in detail a schematic structure of a traffic transmission apparatus.

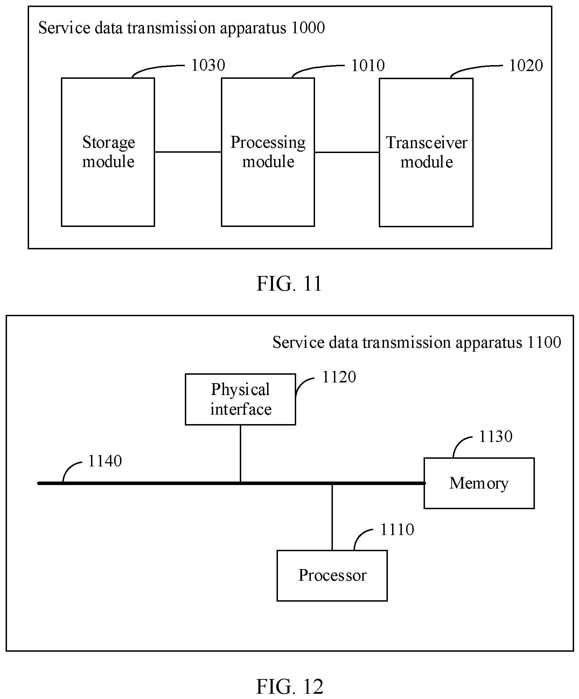

In an example, FIG. 11 is a schematic block diagram of a traffic transmission apparatus 1000 according to an embodiment of this application. The apparatus 1000 in this embodiment of this application may be the traffic transmission apparatus in the foregoing method embodiments, or may be one or more chips in the traffic transmission apparatus. The apparatus 1000 may be configured to perform some or all functions of the traffic transmission apparatus in the foregoing method embodiments. The apparatus 1000 may include a processing module 1010 and a transceiver module 1020. Optionally, the apparatus 1000 may further include a storage module 1030.

For example, the processing module 1010 may be configured to perform determining the scheduling times in step S101, obtaining the priorities and the data packet sizes in step 102, and determining the first traffic packet in step 103 in the foregoing method embodiment, and send the first traffic packet in step 104 by using the transceiver module 1020, or configured to perform step S201 to step 207 in the foregoing method embodiment, and send the first traffic packet in step 208 by using the transceiver module 1020.

Alternatively, the apparatus 1000 may be configured as a general processing system, for example, commonly referred to as a chip. The processing module 1010 may include one or more processors providing processing functions. The transceiver module 1020 may be, for example, an input/output interface, a pin, a circuit, or the like. The input/output interface may be configured to be responsible for information interaction between the chip system and the outside. For example, the input/output interface may output a transmission signal of the traffic transmission apparatus to another module outside the chip for processing. The processing module may execute computer-executable instructions stored in the storage module, to implement the functions of the traffic transmission apparatus in the foregoing method embodiments. In an example, the storage module 1030 optionally included in the apparatus 1000 may be a storage unit in the chip, for example, a register or a cache. Alternatively, the storage module 1030 may be a storage unit that is in the traffic transmission apparatus and that is located outside the chip, for example, a read-only memory (read-only memory, ROM for short), another type of static storage device capable of storing static information and instructions, or a random access memory (random access memory, RAM for short).

In another example, FIG. 12 is a schematic block diagram of another traffic transmission apparatus 1100 according to an embodiment of this application. The apparatus 1100 may be configured to perform some or all functions of the traffic transmission apparatus in the foregoing method embodiments. The apparatus 1100 may include a processor 1110 and a physical interface 1120. Optionally, the apparatus 1100 may further include a memory 1130. Components of the apparatus 1100 are coupled together by using a bus 1140. In addition to a data bus, the bus 1140 includes a power bus, a control bus, and a status signal bus. However, for clear description, various types of buses in the figure are marked as the bus system 1140.

The processor 1110 may be configured to control the traffic transmission apparatus, is configured to perform processing performed by the traffic transmission apparatus in the foregoing embodiments, may perform a processing process related to the traffic transmission apparatus in the foregoing method embodiments and/or another process of the technology described in this application, and may run an operating system, manage a bus, and execute a program or instructions stored in the memory.

The physical interface 1120 may be configured to support sending and receiving of data between the traffic transmission apparatus and the sensor or the receiving apparatus in the foregoing embodiments, so as to support communication between the traffic transmission apparatus and the sensor or the receiving apparatus. In an example, a traffic packet from a sensor is received through the physical interface 1120, and processed by the processor 1110, and a first traffic packet is determined and transmitted to the receiving apparatus through the physical interface 1120.

The memory 1130 may be configured to store program code and data of the traffic transmission apparatus. The memory 1130 may be the storage module 1030 in FIG. 11. It may be understood that in FIG. 12, the memory 1130 is separated from the processor 1110. However, a person skilled in the art can easily understand that the memory 1130 or any part of the memory may be located outside the traffic transmission apparatus 1100. For example, the memory 1130 may include a transmission line and/or a computer product separated from the traffic transmission apparatus. These media may be accessed by the processor 1110 through the bus interface 1140. Alternatively, the memory 1130 or any part thereof may be integrated into the processor 1110, for example, may be a cache and/or a general-purpose register.

It may be understood that FIG. 12 shows only a simplified design of the traffic transmission apparatus. For example, in actual application, the traffic transmission apparatus may include any quantity of physical interfaces, processors, memories, and the like, and all traffic transmission apparatuses that can implement this application fall within the protection scope of this application.

In a possible implementation, the traffic transmission apparatus may also be implemented by using the following: one or more field-programmable gate arrays (field-programmable gate arrays, FPGAs), a programmable logic device (programmable logic device, PLD), a controller, a state machine, a gate logic, a discrete hardware component, any other suitable circuit, or any combination of circuits capable of performing various functions described in this application. In still another example, an embodiment of this application further provides a computer storage medium. The computer storage medium may store program instructions used to indicate any one of the foregoing methods, so that a processor executes the program instructions to implement the methods and functions that are related to the traffic transmission apparatus in the foregoing method embodiments.

The processor may be a general-purpose processor, for example, a general-purpose central processing unit (CPU), a network processor (Network Processor, NP for short), a microprocessor, an application-specific integrated circuit (application-specific integrated circuit, ASIC for short), or one or more integrated circuits for controlling program execution in the solution of this application. The processor may alternatively be a digital signal processor (Digital Signal Processor, DSP for short), a field-programmable gate array (Field-Programmable Gate Array, FPGA for short) or another programmable logic device, a discrete gate or transistor logic device, or a discrete hardware component. Alternatively, the controller/processor may be a combination of processors implementing a computing function, for example, a combination of one or more microprocessors, or a combination of a DSP and a microprocessor. The processor usually performs logical and arithmetic operations based on program instructions stored in the memory.

The memory may further store an operating system and another application program. Specifically, the program may include program code, and the program code includes computer operation instructions. More specifically, the memory may be a ROM, another type of static storage device that can store static information and instructions, a RAM, another type of dynamic storage device that can store information and instructions, a magnetic disk memory, or the like. The memory may be a combination of the foregoing storage types. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in a packaging material.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

## Claims

1. A traffic transmission method, comprising:
determining (101) scheduling times of head traffic packets of at least two of N transmission queues, wherein N is a positive integer greater than or equal to 2;
obtaining (102) priorities of the at least two transmission queues and data packet sizes of the head traffic packets of the at least two transmission queues;
determining (103) a first type of traffic packets from the head traffic packets of the at least two transmission queues based on at least two of the scheduling times, the priorities, and the data packet sizes; and
transmitting (104) a first traffic packet, wherein the first traffic packet is a traffic packet with the smallest data packet size in the first type of traffic packets.

2. The method according to claim 1, wherein the head traffic packets of the at least two transmission queues comprise the first type of traffic packets and a second type of traffic packets, a scheduling time of any traffic packet in the first type of traffic packets is equal, a priority of any traffic packet in the first type of traffic packets is equal, and the scheduling time of any traffic packet in the first type of traffic packets is earlier than a scheduling time of the second type of traffic packets; or
the head traffic packets of the at least two transmission queues comprise the first type of traffic packets, a scheduling time of any traffic packet in the first type of traffic packets is equal, and a priority of any traffic packet in the first type of traffic packets is equal.

3. The method according to claim 1, wherein the head traffic packets of the at least two transmission queues comprise the first type of traffic packets and a second type of traffic packets, a scheduling time of any traffic packet in the first type of traffic packets is equal, and a difference between a priority of any traffic packet in the first type of traffic packets and a highest priority is greater than 0 and less than or equal to a second threshold; and
the scheduling time of any traffic packet in the first type of traffic packets is earlier than or equal to a scheduling time of the second type of traffic packets, the highest priority is a maximum value of priorities of transmission queues corresponding to a third type of traffic packets, and the third type of traffic packets comprise a traffic packet that is in the second type of traffic packets and whose scheduling time is equal to scheduling times of the first type of traffic packets.

4. The method according to claim 3, wherein a size of any traffic packet in the first type of traffic packets meets at least one of the following: the size is less than or equal to a third threshold; or a difference between the size and a size of a traffic packet corresponding to the highest priority is greater than or equal to a fourth threshold.

5. The method according to claim 1, wherein a difference between priorities of any two traffic packets in the first type of traffic packets is less than or equal to a second threshold; and
scheduling times of the first type of traffic packets are a minimum scheduling time, the first type of traffic packets comprise a traffic packet with a highest priority, the minimum scheduling time is a minimum value of the scheduling times of the head traffic packets of the at least two transmission queues, and the highest priority is a maximum value of priorities of transmission queues corresponding to the traffic packets with the minimum scheduling time.

6. The method according to claim 1, wherein the head traffic packets of the at least two transmission queues comprise the first type of traffic packets and a second type of traffic packets, a difference between a scheduling time of any traffic packet in the first type of traffic packets and a minimum scheduling time of the second type of traffic packets is greater than 0 and less than or equal to a first threshold, and a difference between a priority of any traffic packet in the first type of traffic packets and a priority of a traffic packet corresponding to the minimum scheduling time is less than or equal to a second threshold.

7. The method according to claim 6, wherein a size of any traffic packet in the first type of traffic packets meets at least one of the following: the size is less than or equal to a third threshold; or a difference between the size and a size of the traffic packet corresponding to the minimum scheduling time is greater than or equal to a fourth threshold.

8. The method according to claim 1, wherein a difference between scheduling times of any two traffic packets in the first type of traffic packets is less than or equal to a first threshold, and a difference between priorities of any two traffic packets in the first type of traffic packets is less than or equal to a second threshold, wherein
a minimum value of scheduling times of the first type of traffic packets is a minimum value of the scheduling times of the head traffic packets of the at least two transmission queues, the first type of traffic packets comprise a traffic packet with a highest priority, and the highest priority is a maximum value of a priority corresponding to a traffic packet whose scheduling time has a difference less than or equal to the first threshold from the minimum value.

9. The method according to any one of claims 1 to 8, wherein if there are a plurality of traffic packets with the smallest data packet size in the first type of traffic packets, the method further comprises:
determining (207) the first traffic packet based on at least one of a size of buffer space of transmission queues corresponding to the plurality of traffic packets with the smallest data packet size, a size of remaining buffer space, or waiting times of the head traffic packets in a buffer.

10. The method according to claim 9, wherein the determining the first traffic packet based on at least one of a size of buffer space of transmission queues corresponding to the plurality of traffic packets with the smallest data packet size, a size of remaining buffer space, or waiting times of the head traffic packets in a buffer comprises:
selecting, from the plurality of traffic packets with the smallest data packet size, a traffic packet that meets at least one of the following as the first traffic packet:
a transmission queue corresponding to the traffic packet has smallest buffer space;
a transmission queue corresponding to the traffic packet has smallest remaining buffer space; or
a head traffic packet of a transmission queue corresponding to the traffic packet has a longest waiting time in the buffer.

11. A traffic transmission apparatus (1000), comprising:
a processing module (1010), configured to determine scheduling times of head traffic packets of at least two of N transmission queues, wherein N is a positive integer greater than or equal to 2, wherein
the processing module is further configured to obtain priorities of the at least two transmission queues and data packet sizes of the head traffic packets of the at least two transmission queues;
the processing module is further configured to determine a first type of traffic packets from the head traffic packets of the at least two transmission queues based on at least two of the scheduling times, the priorities, and the data packet sizes; and
the processing module is further configured to transmit a first traffic packet through a transceiver module, wherein the first traffic packet is a traffic packet with the smallest data packet size in the first type of traffic packets.

12. The apparatus according to claim 11, wherein the head traffic packets of the at least two transmission queues comprise the first type of traffic packets and a second type of traffic packets, a scheduling time of any traffic packet in the first type of traffic packets is equal, a priority of any traffic packet in the first type of traffic packets is equal, and the scheduling time of any traffic packet in the first type of traffic packets is earlier than a scheduling time of the second type of traffic packets; or
the head traffic packets of the at least two transmission queues comprise the first type of traffic packets, a scheduling time of any traffic packet in the first type of traffic packets is equal, and a priority of any traffic packet in the first type of traffic packets is equal.

13. A vehicle, comprising at least one sensor, the traffic transmission apparatus according to any one of claims 11 to 12, and a receiving apparatus, wherein
the at least one sensor is connected to the traffic transmission apparatus, and the traffic transmission apparatus is connected to the receiving apparatus.

## Patentansprüche

1. Verkehrsübertragungsverfahren, umfassend:
Bestimmen (101) von Dispositionszeiten von Kopf-Verkehrspaketen mindestens zweier von N Übertragungswarteschlangen, wobei N eine positive ganze Zahl größer oder gleich 2 ist;
Erhalten (102) von Prioritäten der mindestens zwei Übertragungswarteschlangen und Datenpaketgrößen der Kopf-Verkehrspakete der mindestens zwei Übertragungswarteschlangen,
Bestimmen (103) eines ersten Typs von Verkehrspaketen aus den Kopf-Verkehrspaketen der mindestens zwei Übertragungswarteschlangen basierend auf mindestens zweien von den Dispositionszeiten, den Prioritäten und den Datenpaketgrößen; und
Übertragen (104) eines ersten Verkehrspakets, wobei das erste Verkehrspaket ein Verkehrspaket mit der kleinsten Datenpaketgröße im ersten Typ von Verkehrspaketen ist.

2. Verfahren nach Anspruch 1, wobei die Kopf-Verkehrspakete der mindestens zwei Übertragungswarteschlangen den ersten Typ von Verkehrspaketen und einen zweiten Typ von Verkehrspaketen umfassen, eine Dispositionszeit jedes Verkehrspakets im ersten Typ von Verkehrspaketen gleich ist, eine Priorität jedes Verkehrspakets im ersten Typ von Verkehrspaketen gleich ist und die Dispositionszeit jedes Verkehrspakets im ersten Typ von Verkehrspaketen früher als eine Dispositionszeit des zweiten Typs von Verkehrspaketen ist; oder
die Kopf-Verkehrspakete der mindestens zwei Übertragungswarteschlangen den ersten Typ von Verkehrspaketen umfassen, eine Dispositionszeit jedes Verkehrspakets im ersten Typ von Verkehrspaketen gleich ist und eine Priorität jedes Verkehrspakets im ersten Typ von Verkehrspaketen gleich ist.

3. Verfahren nach Anspruch 1, wobei die Kopf-Verkehrspakete der mindestens zwei Übertragungswarteschlangen den ersten Typ von Verkehrspaketen und einen zweiten Typ von Verkehrspaketen umfassen, eine Dispositionszeit jedes Verkehrspakets im ersten Typ von Verkehrspaketen gleich ist und eine Differenz zwischen einer Priorität jedes Verkehrspakets im ersten Typ von Verkehrspaketen und einer höchsten Priorität größer als 0 und kleiner als oder gleich wie eine zweite Schwelle ist; oder
die Dispositionszeit jedes Verkehrspakets im ersten Typ von Verkehrspaketen früher als oder gleich wie eine Dispositionszeit des zweiten Typs von Verkehrspaketen ist, die höchste Priorität ein maximaler Wert von Prioritäten von Übertragungswarteschlangen ist, die einem dritten Typ von Verkehrspaketen entsprechen, und der dritte Typ von Verkehrspaketen ein Verkehrspaket umfasst, das im zweiten Typ von Verkehrspaketen ist und dessen Dispositionszeiten gleich wie Dispositionszeiten des ersten Typs von Verkehrspaketen ist.

4. Verfahren nach Anspruch 3, wobei eine Größe jedes Verkehrspakets im ersten Typ von Verkehrspaketen mindestens eines von Folgendem erfüllt: die Größe ist kleiner als oder gleich wie eine dritte Schwelle; oder eine Differenz zwischen der Größe und einer Größe eines Verkehrspakets, das der höchsten Priorität entspricht, ist größer als oder gleich wie eine vierte Schwelle.

5. Verfahren nach Anspruch 1, wobei eine Differenz zwischen Prioritäten beliebiger zwei Verkehrspakete im ersten Typ von Verkehrspaketen kleiner als oder gleich wie eine zweite Schwelle ist; und
es sich bei Dispositionszeiten des ersten Typs von Verkehrspaketen um eine minimale Dispositionszeit handelt, der erste Typ von Verkehrspaketen ein Verkehrspaket mit einer höchsten Priorität umfasst, die minimale Dispositionszeit ein minimaler Wert der Dispositionszeiten der Kopf-Verkehrspakete der mindestens zwei Übertragungswarteschlangen ist und die höchste Priorität ein maximaler Wert von Prioritäten von Übertragungswarteschlangen ist, die den Verkehrspaketen mit der minimalen Dispositionszeit entsprechen.

6. Verfahren nach Anspruch 1, wobei die Kopf-Verkehrspakete der mindestens zwei Übertragungswarteschlangen den ersten Typ von Verkehrspaketen und einen zweiten Typ von Verkehrspaketen umfassen, eine Differenz zwischen einer Dispositionszeit jedes Verkehrspakets im ersten Typ von Verkehrspaketen und einer minimalen Dispositionszeit des zweiten Typs von Verkehrspaketen größer als 0 und kleiner als oder gleich wie eine erste Schwelle ist und eine Differenz zwischen einer Priorität jedes Verkehrspakets im ersten Typ von Verkehrspaketen und einer Priorität eines Verkehrspakets, das der minimalen Dispositionszeit entspricht, kleiner als oder gleich wie eine zweite Schwelle ist.

7. Verfahren nach Anspruch 6, wobei eine Größe jedes Verkehrspakets im ersten Typ von Verkehrspaketen mindestens eines von Folgendem erfüllt: die Größe ist kleiner als oder gleich wie eine dritte Schwelle; oder eine Differenz zwischen der Größe und einer Größe des Verkehrspakets, das der minimalen Dispositionszeit entspricht, ist größer als oder gleich wie eine vierte Schwelle.

8. Verfahren nach Anspruch 1, wobei eine Differenz zwischen Dispositionszeiten beliebiger zwei Verkehrspakete im ersten Typ von Verkehrspaketen kleiner als oder gleich wie eine erste Schwelle ist und eine Differenz zwischen Prioritäten zwischen beliebigen zwei Verkehrspaketen im ersten Typ von Verkehrspaketen kleiner als oder gleich wie eine zweite Schwelle ist, wobei
ein minimaler Wert von Dispositionszeiten des ersten Typs von Verkehrspaketen ein minimaler Wert der Dispositionszeiten der Kopf-Verkehrspakete der mindestens zwei Übertragungswarteschlangen ist, der erste Typ von Verkehrspaketen ein Verkehrspaket mit einer höchsten Priorität umfasst und die höchste Priorität ein maximaler Wert einer Priorität ist, die einem Verkehrspaket entspricht, dessen Dispositionszeit eine Differenz vom minimalen Wert aufweist, die kleiner als oder gleich wie die erste Schwelle ist.

9. Verfahren nach einem der Ansprüche 1 bis 8, wobei das Verfahren, wenn es eine Mehrzahl von Verkehrspaketen mit der kleinesten Datenpaketgröße im ersten Typ von Verkehrspaketen gibt, ferner umfasst:
Bestimmen (207) des ersten Verkehrspakets basierend auf mindestens einem von einer Größe von Pufferraum von Übertragungswarteschlangen, die der Mehrzahl von Verkehrspaketen mit der kleinsten Datenpaketgröße entsprechen, einer Größe von verbleibendem Pufferraum oder Wartezeiten der Kopf-Verkehrspakete in einem Puffer.

10. Verfahren nach Anspruch 9, wobei das Bestimmen des ersten Verkehrspakets basierend auf mindestens einem von einer Größe von Pufferraum von Übertragungswarteschlangen, die der Mehrzahl von Verkehrspaketen mit der kleinsten Datenpaketgröße entsprechen, einer Größe von verbleibendem Pufferraum oder Wartezeiten der Kopf-Verkehrspakete in einem Puffer umfasst:
Auswählen als das erste Verkehrspaket eines Verkehrspakets aus der Mehrzahl von Verkehrspaketen mit der kleinesten Datenpaketgröße, das mindestens eines von Folgendem erfüllt:
eine Übertragungswarteschlange, die dem Verkehrspaket entspricht, weist den kleinsten Pufferraum auf;
eine Übertragungswarteschlange, die dem Verkehrspaket entspricht, weist den kleinsten verbleibenden Pufferraum auf; oder
ein Kopf-Verkehrspaket einer Übertragungswarteschlange, die dem Verkehrspaket entspricht, weist eine längste Wartezeit im Puffer auf.

11. Verkehrsübertragungsvorrichtung (1000), umfassend:
ein Verarbeitungsmodul (1010), das zum Bestimmen von Dispositionszeiten von Kopf-Verkehrspaketen mindestens zweier von N Übertragungswarteschlangen konfiguriert ist, wobei N eine positive ganze Zahl größer als oder gleich 2 ist, wobei das Verarbeitungsmodul ferner zum Erhalten von Prioritäten der mindestens zwei Übertragungswarteschlangen und Datenpaketgrößen der Kopf-Verkehrspakete der mindestens zwei Übertragungswarteschlangen konfiguriert ist;
das Verarbeitungsmodul ferner zum Bestimmen eines ersten Typs von Verkehrspaketen aus den Kopf-Verkehrspaketen der mindestens zwei Übertragungswarteschlangen basierend auf mindestens zweien von den Dispositionszeiten, den Prioritäten und den Datenpaketgrößen konfiguriert ist; und
das Verarbeitungsmodul ferner zum Übertragen eines ersten Verkehrspakets durch ein Sendeempfängermodul konfiguriert ist, wobei das erste Verkehrspaket ein Verkehrspaket mit der kleinsten Datenpaketgröße im ersten Typ von Verkehrspaketen ist.

12. Vorrichtung nach Anspruch 11, wobei die Kopf-Verkehrspakete der mindestens zwei Übertragungswarteschlangen den ersten Typ von Verkehrspaketen und einen zweiten Typ von Verkehrspaketen umfassen, eine Dispositionszeit jedes Verkehrspakets im ersten Typ von Verkehrspaketen gleich ist, eine Priorität jedes Verkehrspakets im ersten Typ von Verkehrspaketen gleich ist und die Dispositionszeit jedes Verkehrspakets im ersten Typ von Verkehrspaketen früher als eine Dispositionszeit des zweiten Typs von Verkehrspaketen ist; oder
die Kopf-Verkehrspakete der mindestens zwei Übertragungswarteschlangen den ersten Typ von Verkehrspaketen umfassen, eine Dispositionszeit jedes Verkehrspakets im ersten Typ von Verkehrspaketen gleich ist und eine Priorität jedes Verkehrspakets im ersten Typ von Verkehrspaketen gleich ist.

13. Fahrzeug, umfassend mindestens einen Sensor, die Verkehrsübertragungsvorrichtung nach einem der Ansprüche 11 bis 12 und eine Empfangsvorrichtung, wobei
der mindestens eine Sensor mit der Verkehrsübertragungsvorrichtung verbunden ist und die Verkehrsübertragungsvorrichtung mit der Empfangsvorrichtung verbunden ist.

## Revendications

1. Procédé de transmission de trafic, comprenant les étapes consistant à :
déterminer (101) des temps de programmation de paquets de trafic de tête d'au moins deux files d'attente de transmission parmi N files d'attente de transmission, dans lequel N est un nombre entier positif supérieur ou égal à 2 ;
obtenir (102) des priorités des au moins deux files d'attente de transmission et des tailles de paquet de données des paquets de trafic de tête des au moins deux files d'attente de transmission ;
déterminer (103) un premier type de paquets de trafic à partir des paquets de trafic de tête des au moins deux files d'attente de transmission sur la base d'au moins deux critères parmi les temps de programmation, les priorités et les tailles de paquet de données ; et
transmettre (104) un premier paquet de trafic, le premier paquet de trafic étant un paquet de trafic ayant la taille de paquet de données la plus petite parmi le premier type de paquets de trafic.

2. Procédé selon la revendication 1, dans lequel les paquets de trafic de tête des au moins deux files d'attente de transmission comprennent le premier type de paquets de trafic et un deuxième type de paquets de trafic, un temps de programmation d'un paquet de trafic quelconque parmi le premier type de paquets de trafic est égal, une priorité d'un paquet de trafic quelconque parmi le premier type de paquets de trafic est égale, et le temps de programmation d'un paquet de trafic quelconque parmi le premier type de paquets de trafic est antérieur à un temps de programmation du deuxième type de paquets de trafic ; ou
les paquets de trafic de tête des au moins deux files d'attente de transmission comprennent le premier type de paquets de trafic, un temps de programmation d'un paquet de trafic quelconque parmi le premier type de paquets de trafic est égal, et une priorité d'un paquet de trafic quelconque parmi le premier type de paquets de trafic est égale.

3. Procédé selon la revendication 1, dans lequel les paquets de trafic de tête des au moins deux files d'attente de transmission comprennent le premier type de paquets de trafic et un deuxième type de paquets de trafic, un temps de programmation d'un paquet de trafic quelconque parmi le premier type de paquets de trafic est égal, et une différence entre une priorité d'un paquet de trafic quelconque parmi le premier type de paquets de trafic et une priorité la plus élevée est supérieure à 0 et inférieure ou égale à un deuxième seuil ; et
le temps de programmation d'un paquet de trafic quelconque parmi le premier type de paquets de trafic est antérieur ou égal au temps de programmation du deuxième type de paquets de trafic, la priorité la plus élevée est une valeur maximale de priorités de files d'attente de transmission correspondant à un troisième type de paquets de trafic, et le troisième type de paquets de trafic comprend un paquet de trafic qui est parmi le deuxième type de paquets de trafic et dont le temps de programmation est égal aux temps de programmation du premier type de paquets de trafic.

4. Procédé selon la revendication 3, dans lequel une taille d'un paquet de trafic quelconque parmi le premier type de paquets de trafic satisfait à au moins une des conditions suivantes : la taille est inférieure ou égale à un troisième seuil ; ou une différence entre la taille et une taille d'un paquet de trafic correspondant à la priorité la plus élevée est supérieure ou égale à un quatrième seuil.

5. Procédé selon la revendication 1, dans lequel une différence entre des priorités de deux paquets de trafic quelconques parmi le premier type de paquets de trafic est inférieure ou égale à un deuxième seuil ; et
des temps de programmation du premier type de paquets de trafic sont un temps de programmation minimal, le premier type de paquets de trafic comprend un paquet de trafic ayant une priorité la plus élevée, le temps de programmation minimal est une valeur minimale des temps de programmation des paquets de trafic de tête des au moins deux files d'attente de transmission, et la priorité la plus élevée est une valeur maximale de priorités de files d'attente de transmission correspondant aux paquets de trafic ayant le temps de programmation minimal.

6. Procédé selon la revendication 1, dans lequel les paquets de trafic de tête des au moins deux files d'attente de transmission comprennent le premier type de paquets de trafic et un deuxième type de paquets de trafic, une différence entre un temps de programmation d'un paquet de trafic quelconque parmi le premier type de paquets de trafic et un temps de programmation minimal du deuxième type de paquets de trafic est supérieure à 0 et inférieure ou égale à un premier seuil, et une différence entre une priorité d'un paquet de trafic quelconque parmi le premier type de paquets de trafic et une priorité d'un paquet de trafic correspondant au temps de programmation minimal est inférieure ou égale à un deuxième seuil.

7. Procédé selon la revendication 6, dans lequel une taille d'un paquet de trafic quelconque parmi le premier type de paquets de trafic satisfait à au moins une des conditions suivantes : la taille est inférieure ou égale à un troisième seuil ; ou une différence entre la taille et une taille du paquet de trafic correspondant au temps de programmation minimal est supérieure ou égale à un quatrième seuil.

8. Procédé selon la revendication 1, dans lequel une différence entre des temps de programmation de deux paquets de trafic quelconques parmi le premier type de paquets de trafic est inférieure ou égale à un premier seuil, et une différence entre des priorités de deux paquets de trafic quelconques parmi le premier type de paquets de trafic est inférieure ou égale à un deuxième seuil,
une valeur minimale de temps de programmation du premier type de paquets de trafic étant une valeur minimale des temps de programmation des paquets de trafic de tête des au moins deux files d'attente de transmission, le premier type de paquets de trafic comprenant un paquet de trafic ayant une priorité plus élevée, et la priorité la plus élevée étant une valeur maximale d'une priorité correspondant à un paquet de trafic dont le temps de programmation a une différence inférieure ou égale au premier seuil par rapport à la valeur minimale.

9. Procédé selon l'une quelconque des revendications 1 à 8, le procédé comprenant en outre, s'il existe une pluralité de paquets de trafic ayant la taille de paquet de données la plus petite parmi le premier type de paquets de trafic, l'étape consistant à :
déterminer (207) le premier paquet de trafic sur la base d'au moins un élément parmi une taille d'un espace tampon de files d'attente de transmission correspondant à la pluralité de paquets de trafic ayant la taille de paquet de données la plus petite, une taille de l'espace tampon restant ou des temps d'attente des paquets de trafic de tête dans une mémoire tampon.

10. Procédé selon la revendication 9, dans lequel la détermination du premier paquet de trafic sur la base d'au moins un élément parmi une taille d'un espace tampon de files d'attente de transmission correspondant à la pluralité de paquets de trafic ayant la taille de paquet de données la plus petite, une taille de l'espace tampon restant ou des temps d'attente des paquets de trafic de tête dans une mémoire tampon comprend l'étape consistant à :
sélectionner, parmi la pluralité de paquets de trafic ayant la taille de paquet de données la plus petite, un paquet de trafic qui répond à au moins un des critères suivants en tant que premier paquet de trafic :
une file d'attente de transmission correspondant au paquet de trafic a un espace tampon le plus petit ;
une file d'attente de transmission correspondant au paquet de trafic a un espace tampon restant le plus petit ; ou
un paquet de trafic de tête d'une file d'attente de transmission correspondant au paquet de trafic a un temps d'attente le plus long dans la mémoire tampon.

11. Appareil de transmission de trafic (1000), comprenant :
un module de traitement (1010), configuré pour déterminer des temps de programmation de paquets de trafic de tête d'au moins deux files d'attente de transmission parmi N files d'attente de transmission, dans lequel N est un nombre entier positif supérieur ou égal à 2,
le module de traitement étant en outre configuré pour obtenir des priorités des au moins deux files d'attente de transmission et des tailles de paquet de données des paquets de trafic de tête des au moins deux files d'attente de transmission ;
le module de traitement étant en outre configuré pour déterminer un premier type de paquets de trafic à partir des paquets de trafic de tête des au moins deux files d'attente de transmission sur la base d'au moins deux critères parmi les temps de programmation, les priorités et les tailles de paquet de données ; et
le module de traitement étant en outre configuré pour transmettre un premier paquet de trafic par l'intermédiaire d'un module émetteur-récepteur, le premier paquet de trafic étant un paquet de trafic ayant la taille de paquet de données la plus petite parmi le premier type de paquets de trafic.

12. Appareil selon la revendication 11, dans lequel les paquets de trafic de tête des au moins deux files d'attente de transmission comprennent le premier type de paquets de trafic et un deuxième type de paquets de trafic, un temps de programmation d'un paquet de trafic quelconque parmi le premier type de paquets de trafic est égal, une priorité d'un paquet de trafic quelconque parmi le premier type de paquets de trafic est égale, et le temps de programmation d'un paquet de trafic quelconque parmi le premier type de paquets de trafic est antérieur à un temps de programmation du deuxième type de paquets de trafic ; ou
les paquets de trafic de tête des au moins deux files d'attente de transmission comprennent le premier type de paquets de trafic, un temps de programmation d'un paquet de trafic quelconque parmi le premier type de paquets de trafic est égal, et une priorité d'un paquet de trafic quelconque parmi le premier type de paquets de trafic est égale.

13. Véhicule, comprenant au moins un capteur, l'appareil de transmission de trafic selon l'une quelconque des revendications 11 et 12 et un appareil de réception,
l'au moins un capteur étant connecté à l'appareil de transmission de trafic, et l'appareil de transmission de trafic étant connecté à l'appareil de réception.
